# FASCICULE DE BREVET EUROPEEN

(11) **EP 4 069 525 B1**
(45) Date de publication et mention de la délivrance du brevet: **07.02.2024**
(21) Numéro de dépôt: 20828542.9
(22) Date de dépôt: 02.12.2020
(51) Int. Cl.: B60C 9/04, B60C 13/00, B60C 19/00, H01Q 1/22, H01Q 9/26, B29D 30/00

(54) **PNEUMATIQUE EQUIPE D'UN TRANSPONDEUR RADIOFREQUENCE**
REIFEN, DER EINEN RADIOFREQUENZ-TRANSPONDER UMFASST
TYRE COMPRISING A RADIOFREQUENCY TRANSPONDER

(30) Priorité: 04.12.2019 FR 1913726
(43) Date de publication de la demande: 12.10.2022
(73) Titulaire: COMPAGNIE GENERALE DES ETABLISSEMENTS MICHELIN, 63000 Clermont-Ferrand (FR)
(72) Inventeur: DESTRAVES, Julien, 63040 CLERMONT-FERRAND Cedex 9 (FR); GUINAULT, Pierre, 63040 CLERMONT-FERRAND Cedex 9 (FR); ROBERT, Michel, 63040 CLERMONT-FERRAND Cedex 9 (FR)
(74) Mandataire: M.F.P. Michelin
(86) Numéro de dépôt international: PCT/FR2020/052242
(87) Numéro de publication internationale: WO 2021/111075

(56) Documents cités:
- EP-A1- 1 977 912
- WO-A1-2018/104620
- WO-A1-2019/175509
- WO-A2-2019/220063

## Description

### Domaine de l'invention

La présente invention concerne une enveloppe pneumatique équipée d'un dispositif électronique de radio identification ou transpondeur radiofréquence subissant, en particulier en service lorsqu'elle est montée sur un véhicule terrestre, de fortes sollicitations thermo mécaniques.

### Arrière-plan technologique

Pour le domaine des dispositifs d'identification RFID (acronyme de Radio Frequency Identification), des transpondeurs radiofréquences passifs sont classiquement utilisés pour l'identification, le suivi et la gestion d'objets. Ces dispositifs permettent une gestion automatisée plus fiable et plus rapide.

Ces transpondeurs à identification radiofréquences passifs sont constitués généralement d'au moins une puce électronique et une antenne formée par une boucle magnétique ou une antenne rayonnante que l'on fixe à l'objet à identifier.

La performance de communication du transpondeur radiofréquence s'exprime par la distance maximale de communication du transpondeur radiofréquence avec un lecteur radiofréquence pour un même signal communiqué au ou par le lecteur radiofréquence.

Dans le cas des produits fortement extensibles comme par exemple les pneumatiques, un besoin existe d'identifier le produit tout au long de son existence depuis sa fabrication jusqu'à son retrait du marché et, en particulier, lors de son usage. Ensuite, afin de faciliter cette tâche, notamment en condition d'usage sur véhicule, une performance de communication élevée est requise qui s'exprime par la possibilité d'interroger le transpondeur radiofréquence à longue distance du produit, plusieurs mètres, par l'intermédiaire d'un lecteur radiofréquence. Enfin, on souhaite que le coût de fabrication d'un tel dispositif soit le plus compétitif possible.

Le document WO 2018/104619 A1 décrit une enveloppe pneumatique comprenant un transpondeur radiofréquence passif. On connait dans l'état de la technique, notamment d'après le document WO 2019175509A1, un transpondeur à identification radiofréquence passif formé d'un fil guipé sur lequel est enroulé un élément filaire conducteur connecté à une puce électronique comprenant un circuit d'émission-réception radiofréquence. L'avantage d'un tel transpondeur réside dans la simplicité de sa réalisation, ce qui le rend bon marché, et la miniaturisation de l'objet final.

Cependant, un tel transpondeur radiofréquence passif présente des faiblesses dans son usage lorsqu'il est intégré à une enveloppe pneumatique. En effet, le diamètre de l'élément filaire conducteur est faible pour permettre une connexion à la puce électronique qui peut être du type e-Tread. Or les sollicitations en service subies par une enveloppe pneumatique sont sévères ce qui peut mettre à mal l'intégrité physique d'un tel transpondeur. De plus, il faut aussi s'assurer que l'introduction d'un tel transpondeur radiofréquence dans une enveloppe pneumatique ne perturbe pas l'intégrité physique de celle-ci. Enfin, la nature caoutchouteuse de l'enveloppe pneumatique et la diversité des mélanges élastomères influencent la performance de radiocommunication d'un tel transpondeur.

La présente invention porte sur une enveloppe pneumatique équipée d'un transpondeur radiofréquence passif tel que décrit dans l'état de la technique visant à améliorer le compromis de performances, et en particulier l'intégrité physique de l'enveloppe pneumatique et celle du transpondeur radiofréquence lors de son usage sur véhicule tout en préservant la performance de radiocommunication du transpondeur radiofréquence.

### Description de l'invention

L'invention porte sur une enveloppe pneumatique de forme toroïdale autour d'un axe de référence équipée d'un transpondeur radiofréquence passif. L'enveloppe pneumatique comporte :
- un bloc sommet, comprenant une armature de sommet présentant une extrémité axiale à chacun de ses bords et une bande de roulement, réuni à chacune de ses extrémités axiales à un bourrelet, présentant une extrémité intérieure, située axialement et radialement intérieurement au bourrelet par rapport à l'axe de référence, par l'intermédiaire d'un flanc,
- Une armature de carcasse, comprenant au moins une couche d'armature de carcasse formée d'éléments de renforcement parallèles entre eux, définissant une direction de renforcement, insérés entre deux couches de calandrage en mélange élastomère,
- La au moins une couche d'armature de carcasse étant ancrée dans chacun des bourrelets par retournement autour d'une tringle annulaire pour former une partie principale de la au moins une couche d'armature de carcasse, s'étendant d'une tringle à l'autre et située radialement intérieurement par rapport au bloc sommet, et un retournement de la au moins une couche d'armature de carcasse dans chacun des bourrelets,
- Une deuxième couche de mélange élastomère formant la surface extérieure de l'enveloppe pneumatique dans la zone du bourrelet, ladite seconde couche de mélange élastomère étant destinée à venir en contact avec la jante,
- Une troisième couche de mélange élastomère située radialement extérieurement au contact de la deuxième couche de mélange élastomère formant la surface extérieure dudit flanc.
- Le transpondeur radiofréquence passif, comprenant une âme principale définissant un premier axe longitudinal et isolante électriquement, un premier fil de couverture primaire enroulé en spires autour de l'âme principale définissant un diamètre d'enroulement D et un dispositif d'isolation électrique disposé radialement extérieurement au premier fil de couverture primaire par rapport au premier axe longitudinal.
- Le premier fil de couverture primaire comprenant au moins deux éléments filaires conducteurs, dont le diamètre est compris entre 0,05 et 0,15 millimètres, reliés galvaniquement à au moins une puce électronique comprenant un composant d'émission-réception radiofréquence
- L'âme principale présentant une rigidité inférieure à la rigidité maximale du premier fil de couverture primaire.
L'enveloppe pneumatique est caractérisée en ce que le dispositif d'isolation électrique présente une permittivité diélectrique relative moyenne inférieure ou égale à 10, préférentiellement inférieure à 5, sur une épaisseur supérieure ou égale au sixième du diamètre d'enroulement D du premier fil de couverture primaire**, en ce que** le transpondeur radiofréquence passif, suivant sa direction longitudinale, est situé au droit d'au moins deux éléments de renforcement de la partie principale de la au moins une couche d'armature de carcasse, **en ce que** le transpondeur radiofréquence passif se situe axialement extérieurement par rapport à l'extrémité intérieure du bourrelet et radialement entre l'extrémité la plus radialement extérieure de la tringle et l'extrémité axiale de l'armature de sommet, préférentiellement à l'intérieur de l'enveloppe pneumatique et en ce que l'épaisseur de mélange élastomère séparant le fil de couverture externe du transpondeur radiofréquence passif, situé le plus radialement extérieurement par rapport au premier axe longitudinal, et les éléments de renforcement est supérieure à 0,5 millimètre, préférentiellement supérieure à 1,0 millimètre.

Avantageusement, le fil de couverture externe du transpondeur radiofréquence passif est recouvert d'un promoteur d'adhésion entre le fil de couverture externe et les mélanges élastomères adjacents au fil de couverture externe.

On entend ici par le terme « élastomère », l'ensemble des élastomères y compris les TPE (acronyme de Thermo Plastiques Elastomères), tels que par exemple les polymères diéniques, c'est-à-dire comprenant des unités diéniques, les silicones, les polyuréthanes et les polyoléfines.

On entend ici par le terme « élément filaire conducteur », que l'élément présente une dimension principale suivant sa longueur par rapport aux autres dimensions tridimensionnelles de l'élément, c'est à-dire au moins un facteur 10. De plus, cet élément est conducteur, c'est à-dire qu'il conduit les charges électriques le long de la dimension principale. Il peut s'agir par exemple d'un fil entièrement métallique ou recouvert sur sa surface externe d'un matériau métallique comme le cuivre, le zinc, le laiton, l'argent ou l'or. Ces éléments filaires conducteurs peuvent être indifféremment un composant mono filament ou multiple filaments. Il peut contribuer à mettre en oeuvre les fonctions de la puce, en particulier alimenter en énergie la puce et/ou former une antenne radiofréquence.

On entend ici par le terme « puce », tout composant électronique intégré mettant en oeuvre une ou plusieurs fonctions dont au moins un système d'émission-réception radiofréquence comprenant un composant d'émission-réception radiofréquence et une antenne radiofréquence. Une « puce » peut ainsi former un capteur, présenter une capacité de traitement de données, une mémoire.

On entend ici par le terme « transpondeur radiofréquence passif » que le système électronique émet un signal en réponse à un signal réceptionné sans apport d'énergie en propre pour émettre cette réponse, c'est-à-dire que l'énergie d'émission de la réponse est apportée par le signal interrogateur au système électronique.

On entend par le terme « situé au droit de deux éléments de renforcement » que la projection orthogonale de l'élément, ici le premier fil de couverture enroulé sur l'âme principale, sur le plan défini par deux éléments de renforcement parallèles de la partie principale de la au moins une couche d'armature de carcasse coupe ces deux éléments de renforcement au moment de l'ébauche à cru de l'enveloppe pneumatique.

Le transpondeur radiofréquence passif est conçu de telle sorte que celui-ci fonctionne en champ lointain par l'intermédiaire d'une antenne rayonnante dipôle pour favoriser la distance de communication. Cette antenne rayonnante dipôle comprend les deux éléments filaires conducteurs du premier fil de couverture primaire. Cette antenne rayonnante dipôle se présente sous la forme d'une hélice ce qui permet de supporter aisément les sollicitations thermo mécaniques importantes que l'on rencontre au sein d'une enveloppe pneumatique, notamment en service. Cette mise en hélice est facilitée par la présence de l'âme principale qui sert de guide à l'hélice. C'est le volume occupée par l'âme principale qui est importante pour la mise en hélice des éléments filaires conducteurs. De plus, la souplesse de l'âme principale permet de ne pas rendre trop rigide le transpondeur radiofréquence, ce qui limite les efforts transitant dans le transpondeur radiofréquence. En effet, la présence de l'âme principale assure une nouvelle voie de passage pour les efforts transitant au travers du transpondeur radiofréquence, en particulier sous fortes sollicitations, ce qui limite les efforts transitant dans les éléments filaires conducteurs et notamment au niveau des connexions galvaniques avec la puce électronique, Le choix d'une rigidité faible, en relatif par rapport à celle des éléments filaires conducteurs, assure de limiter les efforts générés par la déformation de l'âme principale par rapport à une âme à forte rigidité pour une iso déformation de l'âme principale. Ainsi, la transition des efforts de l'âme principale vers les éléments filaires conducteurs est limité et on favorise la déformation de ces éléments filaires conducteurs dont la mise en hélice minimise les contraintes par la forme géométrique. De ce fait la synergie entre les propriétés mécaniques de l'âme principale, la mise en hélice des éléments filaires conducteurs et leur diamètre garantit de limiter les efforts transitant dans les éléments filaires conducteurs et notamment au niveau des liaisons galvaniques avec la puce, ce qui assure l'endurance de l'assemblage dans une environnement fortement sollicitant comme le pneumatique. Une rigidité plus forte aurait nécessité d'employer un diamètre de fil plus élevé pour l'élément filaire conducteur et/ou opter pour un matériau dont la limite d'endurance est plus élevée. Cette endurance accrue du transpondeur radiofréquence autorise de le positionner dans les zones les plus sollicitantes du pneumatiques, ce qui n'est pas permis pour des conceptions classiques de transpondeur radiofréquence où l'antenne radiofréquence est connectée galvaniquement à la puce. De plus un diamètre de l'élément filaire conducteur plus petit, compris entre 50 et 150 micromètres, garantit une meilleure qualité de la connexion galvanique de l'élément filaire conducteur à la puce électronique, ce qui renforce encore son endurance. Et, on garantit aussi que la résistance des pertes sera faible dans l'élément filaire conducteur, améliorant ainsi les performances radioélectriques de l'antenne radiofréquence Cependant, il est nécessaire de conserver une certaine résistance mécanique à l'élément filaire conducteur pour supporter les contraintes thermomécaniques qu'il subira dans un environnement fortement sollicitant comme l'enveloppe pneumatique, sans optimiser la limite à rupture du matériau de ces éléments filaires, généralement en acier doux. Ce mode de réalisation permet d'avoir une solution technico-économico-industrielle différentiant pour les transpondeurs radiofréquences avec connexion galvanique entre l'antenne radiofréquence et la puce électronique La conduction du signal électromagnétique s'effectuant par effet de peau, la réduction du diamètre de l'élément filaire conducteur, dans la gamme précitée, modifie faiblement la performance radioélectrique de l'antenne dipôle ainsi constituée. L'âme principale doit être de section fermée, pleine ou creuse et isolante électriquement afin de guider la formation du ressort et ne pas perturber la performance de radiocommunication de l'antenne rayonnante dipôle. L'ensemble contribue à l'intégrité physique du transpondeur radiofréquence passif au sein de l'enveloppe pneumatique. Enfin, la puce étant équipée d'un circuit d'émission-réception radiofréquence, l'ensemble constitue un transpondeur radiofréquence passif.

On entend ici par le terme « âme extensible », que l'âme présente une capacité d'élongation et de retour élastique élevée, supérieure à 5%, typiquement supérieure à 50% ou à 100"% de sa longueur au repos. Il peut s'agir par exemple d'une âme en caoutchouc naturel ou synthétique tel que du polyuréthane ou de l'élasthanne.

Généralement, on crée une antenne rayonnante dipôle définissant un premier axe longitudinale à l'aide des deux éléments filaires conducteurs connectés à la puce électronique qui s'éloignent de celle-ci suivant deux directions opposées l'une de l'autre. Ainsi on réalise une antenne dipôle demi-onde qui a l'avantage d'être une antenne omnidirectionnelle en émission et réception permettant de l'affranchir de contraintes de positionnement de l'antenne rayonnante au sein de l'enveloppe pneumatique pour optimiser le champ de communication radiofréquence. Cela rend robuste la performance de communication du transpondeur radiofréquence passif. Le premier fils de couverture primaire comprenant ces éléments filaires conducteurs sont mis en hélice autour de l'âme primaire pour conserver une orientation rectiligne à la dite antenne dipôle demi-onde. Ensuite, l'antenne rayonnante dipôle demi-onde et la puce sont noyées au sein d'un dispositif d'isolation électrique. Cette isolation électrique minimise les pertes électriques et améliore donc la performance de communication du transpondeur radiofréquence aussi bien en émission qu'en réception. La qualité d'isolation électrique est évaluée au travers d'une caractéristique, la permittivité diélectrique relative du milieu constitué par le dispositif d'isolation électrique. Cette permittivité diélectrique relative doit au moins être inférieure à 10 pour avoir une performance de radiocommunication et préférentiellement inférieure à 5 pour avoir une distance améliorée de lecture du transpondeur radiofréquence passif lorsque celui-ci est placé dans l'architecture de l'enveloppe pneumatique au niveau du flanc ou du bourrelet. De plus, il faut au moins un recouvrement du premier fil de couverture primaire comprenant l'antenne rayonnante dipôle demi-onde sur une épaisseur d'environ un sixième du diamètre d'enroulement D de l'hélice. En dessous de ce seuil, la performance de communication radiofréquence ne peut être garantie de manière satisfaisante au niveau du transpondeur radiofréquence passif incorporé au sein de l'enveloppe pneumatique.

Et pour l'intégrité physique du transpondeur radiofréquence et/ou celle de l'enveloppe pneumatique, il convient de garantir la présence d'une quantité suffisante de mélange élastomère entre le fil de couverture externe et les éléments de renforcement de l'enveloppe pneumatique. Généralement ces composants sont de nature non élastomère, le contact entre ces composants peut engendrer une rupture de l'un, de l'autre ou des deux composants sous sollicitations cycliques au cours du cycle de vie de l'enveloppe pneumatique. Dans le cas où la rupture intervient au niveau du fil de couverture du transpondeur, comme par exemple le premier fil de couverture primaire, cela peut détériorer le fonctionnement radiofréquence du transpondeur. Dans le cas de la détérioration des éléments de renforcement, par exemple au niveau de la couche d'armature de carcasse, cela peut engendrer un déséquilibre mécanique de l'armature de carcasse entrainant une détérioration accélérée de celle-ci et par voie de conséquence de l'enveloppe pneumatique. Une épaisseur de 0,5 millimètre est au minimum nécessaire pour les zones d'implantation du transpondeur radiofréquence dans l'enveloppe pneumatique les moins sollicitées. Une épaisseur d'au moins un millimètre entre ces composants assure une intégrité physique améliorée des deux composants quelle que soit l'implantation du transpondeur radiofréquence passif dans le flanc ou le bourrelet de l'enveloppe pneumatique.

Le fait que la dimension caractéristique du transpondeur radiofréquence passif définie par le premier axe longitudinal soit située au droit de plusieurs éléments de renforcement de la couche d'armature de carcasse assure un positionnement maitrisé du transpondeur radiofréquence passif suivant l'épaisseur de l'enveloppe pneumatique, notamment lors de la fabrication de celle-ci lors des étapes de conformation et de cuisson. En effet, cette configuration réduit le déplacement possible de l'antenne dipôle demi-onde au sein des diverses couches non réticulées, notamment par rapport à la couche d'armature de carcasse, lors de la confection à cru de l'enveloppe pneumatique. Cela améliore donc sensiblement l'intégrité physique du transpondeur radiofréquence passif au cours de son usage à l'intérieur de l'enveloppe pneumatique. La couche principale d'armature de carcasse de l'enveloppe pneumatique étant disposée d'une tringle à l'autre, cela autorise une large zone d'implantation du transpondeur radiofréquence passif dans l'enveloppe pneumatique qui soit opérationnelle. En effet, on maitrise alors la quantité de matière élastomère entourant le transpondeur radiofréquence passif permettant d'accorder la longueur de l'antenne dipôle rayonnante à l'environnement électrique de l'antenne dipôle rayonnante au sein du pneumatique de façon fiable et robuste.

Enfin, le transpondeur radiofréquence se situe dans la zone du bourrelet et du flanc de l'enveloppe pneumatique, notamment entre la tringle et l'armature de sommet du bloc sommet, afin de faciliter la communication de celui-ci par un lecteur radiofréquence externe notamment en service sur véhicule. En effet, les éléments métalliques de la carrosserie du véhicule, comme l'aile, ou la roue généralement métalliques gênent la propagation des ondes radioélectriques vers ou depuis la transpondeur radiofréquence passif situé avec l'enveloppe pneumatique, notamment dans la gamme de fréquences des UHF L'implantation du transpondeur radiofréquence passif au niveau du flanc et du bourrelet, radialement à l'extérieur de la tringle de l'enveloppe pneumatique facilite l'interrogation et la lecture du transpondeur radiofréquence passif par un lecteur radiofréquence externe à grande distance dans de nombreuses positions du lecteur radiofréquence externe lorsque l'enveloppe pneumatique est en service sur le véhicule. La communication du transpondeur radiofréquence passif est alors robuste et fiable. Bien que non indispensable pour la communication radiofréquence, le transpondeur radiofréquence passif se situe à l'intérieur de l'enveloppe pneumatique. Il est alors incorporé dans celle-ci au cours de la fabrication de l'enveloppe pneumatique, ce qui sécurise les informations contenues en lecture seule dans la mémoire de la puce électronique du transpondeur radiofréquence passif comme, par exemple, l'identification de l'enveloppe pneumatique. L'alternative consiste à fixer, par les techniques connues de l'état de l'art, un patch en mélange élastomère contenant ledit transpondeur radiofréquence passif sur les surfaces externes de l'enveloppe pneumatique comme par exemple au niveau de la couche de gomme intérieure ou du flanc. Cette opération peut avoir lieu à tout moment au cours de la vie de l'enveloppe pneumatique, ce qui rend moins fiable les informations de l'enveloppe pneumatique contenues dans la mémoire de la puce électronique du transpondeur radiofréquence passif.

Optionnellement pour l'intégrité physique du pneumatique, il est aussi avantageux de garantir la cohésion entre les composants du transpondeur radiofréquence non adhérents au mélange élastomère situé le plus radialement extérieurement par rapport au premier axe longitudinal et les mélanges élastomères adjacents à ces composants qu'ils soient internes au transpondeur radiofréquence ou compris dans l'architecture de l'enveloppe pneumatique. Généralement, les fils de couverture sont métalliques et /ou textiles et l'âme principale est textile. Les fils de couverture représentent potentiellement des composants non adhérents au mélange élastomères. La puce électronique et ses composants directs sont radialement intérieurs à au moins le premier fil de couverture primaire et ne rentrent pas alors dans ces composants non adhérents. Cette cohésion réduit le risque d'initiation et de propagation de fissure au niveau de l'interface définie par ces milieux différents.

Selon un mode de réalisation spécifique, l'enveloppe pneumatique comprend une quatrième couche de mélange élastomère située axialement extérieurement à la partie principale d'au moins une couche d'armature de carcasse et axialement intérieurement aux deuxième et/ou troisième couches de mélange élastomère.

Ainsi, cette configuration d'enveloppe pneumatique permet d'avoir des compromis de performance du bourrelet et du flanc différentiant et le transpondeur radiofréquence passif peut être inséré au contact de cette quatrième couche de mélange élastomère. Cette quatrième couche de mélange élastomère peut, par exemple, être une gomme de remplissage tringle située entre la partie principale et le retournement de la couche d'armature de carcasse radialement extérieurement à la tringle. Elle peut aussi être une gomme de remplissage du bourrelet et/ou du flanc entre cette gomme de remplissage tringle et/ou le retournement de la couche d'armature de carcasse et les deuxième et/ou troisième couches de mélange élastomère de l'enveloppe pneumatique.

Le transpondeur radiofréquence passif peut alors être en contact avec cette quatrième couche de mélange élastomère.

Selon un autre mode de réalisation spécifique, l'enveloppe pneumatique comprenant une couche étanche à l'air en matériau élastomère, située le plus intérieurement à l'enveloppe pneumatique, l'enveloppe pneumatique comprend une cinquième couche de mélange élastomère située intérieurement à la partie principale de la au moins une couche d'armature de carcasse.

On entend ici par le terme « étanche à l'air », c'est-à-dire fortement imperméable à l'air permettant un roulage de l'enveloppe pneumatique pressurisée pendant au moins un mois sans perte de pression de gonflage en l'absence d'incident sur l'enveloppe pneumatique et dans les mêmes conditions d'usage.

Cette configuration d'enveloppe pneumatique, avec sa cinquième couche de mélange élastomère, permet en particulier des roulages en mode étendu grâce à la cinquième couche de mélange élastomère située au niveau du flanc de l'enveloppe pneumatique. En cas de perte de pression de gonflage de l'enveloppe pneumatique, la cinquième couche en mélange élastomère permet de transmettre des efforts entre le bourrelet et le bloc sommet sans faire flamber le flanc de l'enveloppe pneumatique.

Le transpondeur radiofréquence passif peut alors être en contact avec cette cinquième couche de mélange élastomère.

Selon un mode de réalisation particulier, l'enveloppe pneumatique comprend une couche d'armature formée d'éléments de renforcement insérés entre deux couches de gommes.

Ce sont des enveloppes particulières qui, suivant le type d'usage ou de sollicitations en service, nécessitent des couches d'armature localisées. Par exemple, dans le bourrelet, cette couche d'armature permet de prévenir des frottements entre la roue et l'enveloppe pneumatique. Cette couche d'armature peut aussi être localisée dans certaine zone, en particulier les extrémités axiales du bloc sommet pour contraindre la géométrie du bloc sommet et de l'enveloppe pneumatique sous fortes sollicitations thermo mécaniques. Cette couche d'armature présente généralement au moins une extrémité libre. Le transpondeur radiofréquence passif peut alors être en contact ou à proximité de l'extrémité libre de cette couche d'armature en mélange élastomère. Il convient alors de séparer les fils de couverture externe du transpondeur radiofréquence passif de ces éléments de renforts par une épaisseur de mélange élastomère d'au moins 0,5 millimètre, préférentiellement au moins 1 millimètre.

Selon un mode de réalisation particulier, les éléments de renforcement de la au moins une couche d'armature de carcasse étant métallique, le premier axe longitudinal de l'antenne rayonnante du transpondeur radiofréquence passif forme un angle d'au moins 45 degrés, préférentiellement d'au moins 60 degrés, avec la direction de renforcement de la au moins une couche d'armature de carcasse.

En effet, l'armature de carcasse de l'enveloppe pneumatique comprenant une couche d'éléments de renforcement métalliques définissant une direction de renforcement, il convient d'incliner le premier axe longitudinal de l'antenne dipôle rayonnante constitué par les au moins deux éléments filaires conducteurs d'un angle d'au moins 45 degrés par rapport à cette direction de renforcement. Préférentiellement, cet angle est d'au moins 60 degrés et très préférentiellement le premier axe longitudinal de l'antenne dipôle rayonnante est perpendiculaire à la direction de renforcement. Cette inclinaison est nécessaire pour limiter les perturbations radioélectriques de l'antenne dipôle rayonnante générées par le blindage défini par l'armature de carcasse métallique. La perpendicularité de l'antenne dipôle rayonnante par rapport à l'armature de carcasse minimise ses perturbations. Un angle de 45 degrés autorise un fonctionnement de l'antenne dipôle rayonnante qui est suffisant pour une lecture du transpondeur radiofréquence passif à plus d'un mètre d'une enveloppe pneumatique montée sur jante, tandis qu'un angle de 30 degrés multiplie par deux les perturbations radioélectriques de l'antenne dipôle rayonnante.

Selon un mode de réalisation spécifique, le premier fil de couverture primaire comprenant une âme tertiaire non extensible, disposée colinéairement aux au moins deux éléments filaires conducteurs et à la au moins une puce électronique, et au moins un fil de couverture tertiaire enroulé en spires autour de l'âme tertiaire, des au moins deux éléments filaires conducteurs et de la au moins une puce électronique, l'âme tertiaire présente une rigidité supérieure à la rigidité maximale de chaque élément filaire conducteur.

Ce mode de réalisation permet de rigidifier le premier fil de couverture primaire facilitant ainsi sa manipulation et notamment sa mise en hélice autour de l'âme principale. Afin de conserver l'alignement des éléments filaires conducteurs au cours de la mise en hélice de ceux-ci, ils sont préalablement renforcés par une âme tertiaire plus rigide que les éléments filaires conducteurs sur lesquels ils prennent appui. Ainsi, lors des opérations de manipulation du premier fil de couverture primaire, il est possible d'appliquer des sollicitations sur cette âme tertiaire au lieu de les appliquer seulement sur les éléments filaires conducteurs. Ainsi on réduit les efforts transitant dans les éléments filaires conducteurs assurant une meilleure résistance de ceux-ci ainsi que de la connexion galvanique entre ces éléments filaire conducteurs et la puce électronique. Ce mode de réalisation améliore l'intégrité physique du transpondeur radiofréquence passif. L'âme tertiaire peut être un élément bidimensionnel ou tridimensionnel.

Avantageusement, l'un des éléments filaires conducteurs étant connecté galvaniquement à une extrémité d'un troisième élément filaire conducteur dont l'autre extrémité est connectée galvaniquement à la puce électronique afin de former une boucle, les parties des éléments filaires conducteurs formant la boucle et la au moins une puce électronique sont isolés électriquement.

La boucle ainsi formée constitue un circuit d'adaptation d'impédance située entre la puce électronique et l'antenne dipôle demi-onde constituée par deux brins. Le premier brin est défini par l'élément filaire conducteur qui est directement connecté à la puce électronique L'autre brin d'antenne est constituée par la partie de l'autre élément filaire conducteur s'étendant au-delà de la boucle. La connexion galvanique entre l'une partie d'un des deux éléments filaires conducteur et le troisième élément filaire conducteur peut être réalisée par l'intermédiaire d'une puce électronique ce qui permet d'employer par exemple un procédé de technologie E-Tread entre les divers éléments filaires conducteurs et la puce. L'adaptation d'impédance est fonction à la fois de la longueur curviligne de la boucle, le diamètre des éléments filaires conducteurs formant la boucle. Cette adaptation d'impédance permet d'optimiser la performance radiofréquence du transpondeur radiofréquence à la fréquence propre de communication de celui-ci en limitant les pertes énergétiques. L'isolation électrique sur ce circuit d'adaptation d'impédance permet de limiter les perturbations générées par l'environnement électrique extérieur au transpondeur radiofréquence. Ainsi, l'adaptation d'impédance est satisfaisante quel que soit le positionnement du transpondeur radiofréquence dans l'architecture du pneumatique. De plus cette isolation électrique peut être réalisé par le procédé globtop qui permet d'apposer une résine époxy sur les composants ce qui les protège ainsi que leur connexions aussi bien mécaniquement que chimiquement.

Très avantageusement, la puce électronique et les éléments filaires conducteurs délimitant la boucle sont encapsulés dans une masse rigide isolante électriquement.

Cela permet de garantir la géométrie de la boucle ce qui fige l'impédance électrique du système électronique constituée par la puce électronique et la boucle. Notamment, la mise en hélice du premier fil de couverture primaire ne déforme pas la géométrie de l'ensemble et garantit l'impédance de sortie aux bornes de l'antenne dipôle demi-onde.

Selon un mode de réalisation spécifique, le dispositif d'isolation électrique du transpondeur radiofréquence passif comprend au moins un fil de couverture secondaire enroulé en spires autour d'une âme secondaire, de l'âme principale et du premier fil de couverture primaire, l'âme secondaire étant colinéaire à l'âme principale.

C'est une façon astucieuse de former le dispositif d'isolation électrique au travers d'un procédé de guipage similaire à celui qui pourrait être utilisé pour la première partie du transpondeur radiofréquence passif dans lequel, le fil comprenant l'âme secondaire, l'âme principale et le premier fil de couverture primaire est guipé par le fil de couverture secondaire. Bien entendu dans ce cas, les matériaux de l'âme secondaire et du fil de couverture secondaire sont choisis parmi des matériaux isolants électriquement afin de respecter le niveau de permittivité diélectrique moyen du dispositif d'isolation électrique. De même, l'épaisseur du dispositif d'isolation électrique est définie par les dimensions de l'âme secondaire, du diamètre du fil de couverture secondaire et de l'enroulement en spires de ce dernier défini par le nombre de couches, le pas entre les spires. Il existe une épaisseur du dispositif d'isolation électrique à partir de laquelle on garantit une stabilité du milieu électrique dans lequel se trouve le transpondeur radiofréquence passif lorsque celui-ci est incorporé dans l'architecture d'une enveloppe pneumatique. Cette épaisseur seuil, de l'ordre de 2 à 5 millimètre au-delà du cylindre circonscrit au premier fil de couverture primaire pour des transpondeurs radiofréquences passifs fonctionnant dans la bande de fréquences comprise entre 800 et 960 MHz. Cette épaisseur seuil permet de rendre robuste l'objet de l'invention en terme de performance radiofréquence en assurant un environnement constant aux ondes radioélectriques réceptionnées ou rayonnées par le transpondeur radiofréquence passif. Ceci permet de figer de manière robuste la dimension de l'antenne dipôle rayonnante demi onde pour un fonctionnement à la fréquence de communication ciblée. Bien entendu cette épaisseur d'isolation électrique autour du transpondeur radiofréquence passif peut aussi être obtenue par d'autres structures de dispositif d'isolation électrique comme, par exemple, une masse de mélange élastomère isolante électriquement et présentant une permittivité diélectrique inférieure à 10, préférentiellement inférieure à 5. On entend ici par « isolant électriquement » que la conductivité électrique du mélange élastomère est au minimum en deçà du seuil de percolation des charges conductrices du mélange. La colinéarité des âmes principale et secondaire assure une répartition homogène de l'isolation électrique autour de l'antenne dipôle rayonnante. Idéalement, les deux âmes sont coaxiales, ce qui impose que l'âme secondaire soit de section fermée ou quasi fermée et creuse pour permettre l'insertion de l'âme principale et de l'antenne dipôle demi-onde à l'intérieur.

Généralement, il convient de prendre, par exemple, un fil de couverture secondaire ou une âme secondaire de type textile, comme par exemple du nylon. Dans ce cas, le fil de couverture externe devient le fil de couverture secondaire qu'il faudra recouvrir par un promoteur d'adhésion compatible avec les mélanges élastomères adjacents à ce fil de couverture secondaire.

Avantageusement, la rigidité de l'âme secondaire est au plus égale à la rigidité de l'âme principale.

Cela permet aussi de ne pas rigidifier le transpondeur radiofréquence. Ainsi, les sollicitations thermomécaniques s'exerçant sur le transpondeur radiofréquence sont réparties entre les deux âmes ce qui permet de réduire celles transitant dans l'âme principale. Ainsi, l'intégrité physique de l'antenne dipôle rayonnante et des connexions galvaniques entre la puce électronique et les éléments filaires conducteurs est améliorée même lorsque le transpondeur radiofréquence est implanté dans une zone de l'enveloppe pneumatique fortement sollicitant.

Selon un premier mode de réalisation préférentiel, le transpondeur radiofréquence passif est situé à une interface définie par une surface d'une couche de mélange élastomère de l'enveloppe pneumatique.

C'est un mode de réalisation qui facilite la mise en place du transpondeur radiofréquence passif dans l'architecture de l'enveloppe pneumatique. La pose du transpondeur radiofréquence passif intervenant directement au niveau du moyen de confection de l'ébauche à cru en posant le dit transpondeur radiofréquence passif sur la surface externe d'une couche en mélange élastomère. Cette couche en mélange élastomère peut aussi être une couche de calandrage. Puis le transpondeur radiofréquence passif sera recouvert par une seconde couche en mélange élastomère. Ainsi, le transpondeur radiofréquence passif est alors entièrement enrobé par les composants de l'enveloppe pneumatique. Il est donc noyé au sein de l'enveloppe pneumatique, ce qui assure qu'il soit non falsifiable lorsque la mémoire de la puce électronique est bloquée en écriture.

Préférentiellement, l'interface étant définie par une autre couche de mélange élastomère ou une couche d'armature, le transpondeur radiofréquence passif est situé à une distance d'au moins 5 millimètres des extrémités des couches au niveau de l'interface.

Le transpondeur radiofréquence passif se présente comme un corps étranger dans l'architecture du pneumatique, ce qui constitue une singularité mécanique. Les extrémités des couches au niveau de l'interface constituent aussi des singularités mécaniques. Afin de prévenir l'endurance de l'enveloppe pneumatique, il est préférentiel d'éloigner les deux singularités l'une de l'autre d'une certaine distance. Plus cette distance est grande, plus elle est favorable, la distance minimale de l'influence d'une singularité étant bien entendu proportionnelle à la dimension de cette singularité. La singularité constituée par l'extrémité d'une couche est d'autant plus sensible que la rigidité de la couche est élevée par rapport à la rigidité des couches adjacentes comme, par exemple, une couche d'armature, qu'elle soit de renfort ou de sommet ou de carcasse. Dans le cas où les renforts sont métalliques ou textile avec une rigidité élevée comme dans le cas de l'aramide, par exemple, il convient d'éloigner les deux singularités d'au moins 10 millimètres l'une de l'autre.

Selon un second mode de réalisation préférentiel, le transpondeur radiofréquence passif est situé à l'intérieur d'une couche de mélange élastomère de l'enveloppe pneumatique.

Ce second mode a l'avantage de laisser le choix de la position exacte du transpondeur radiofréquence passif suivant l'épaisseur de l'enveloppe pneumatique, contrairement au premier mode de réalisation préférentiel qui impose la position par l'interface entre les couches en mélange élastomère. Ainsi, il est aussi possible d'enrober le transpondeur radiofréquence passif dans une masse homogène de mélange élastomère d'un point de vue isolation électrique et rigidité, ce qui facilite le bon fonctionnement radiofréquence et mécanique du transpondeur radiofréquence passif. Cela permet aussi de préparer l'intégration du transpondeur radiofréquence dans la couche en mélange élastomère en dehors du moyen de confection de l'enveloppe pneumatique, ce qui est plus productif. Ainsi, ce second mode de réalisation préférentiel offre un plus large choix d'implantation du transpondeur radiofréquence passif au sein de l'enveloppe pneumatique.

Avantageusement, le premier axe longitudinal de l'antenne dipôle rayonnante du transpondeur radiofréquence passif est perpendiculaire à l'épaisseur de la couche de mélange élastomère.

Les couches de mélange élastomère sont généralement des couches épaisses qui se superposent partiellement les unes sur les autres pour confectionner une enveloppe pneumatique. Afin de maitriser au mieux le positionnement du transpondeur radiofréquence passif au sein de l'enveloppe pneumatique, il est préférable d'orienter la dimension principale du transpondeur radiofréquence passif, soit le premier axe longitudinal, de façon perpendiculaire à l'épaisseur de la couche de mélange élastomère. Cela prévient des risques où le transpondeur radiofréquence, incliné par rapport à la surface du mélange élastomère, viendrait lors de la fabrication du pneumatique à traverser la surface externe de la couche de mélange élastomère pour venir en traverser une autre. Ceci serait potentiellement nuisible à l'endurance de l'enveloppe pneumatique.

Très avantageusement, le transpondeur radiofréquence passif est situé à une distance d'au moins 0,3 millimètre des surfaces de la couche de mélange élastomère.

On entend ici par le terme « distance d'au moins 0,3 millimètre » que tout point matériel externe du premier objet, ici le transpondeur radiofréquence passif équipé potentiellement de sa masse d'enrobage, est situé à une distance supérieure ou égale à 0,3 millimètres de tout point matériel du second objet, ici les surfaces de la couche de mélange élastomère. En particulier, cette distance de 0,3 millimètres doit être mesurée à l'état cuit.

Ainsi, on prévient le risque de tout déplacement potentiel sous contraintes thermomécaniques du transpondeur radiofréquence passif au sein de la couche de mélange élastomère ou des dispersions de pose du transpondeur radiofréquence passif au sein de la couche de mélange élastomère lors de la phase de fabrication de l'enveloppe pneumatique. Ce positionnement ne provoquera pas la sortie du transpondeur radiofréquence passif de la couche de mélange élastomère. De ce fait, on garantit une isolation électrique et mécanique contrôlée du transpondeur radiofréquence passif au sein de la couche en mélange élastomère, ce qui garantit une endurance de l'enveloppe pneumatique et du transpondeur radiofréquence tout en garantissant un bon fonctionnement radiofréquence.

Selon un mode de réalisation spécifique, la communication radioélectrique avec le lecteur radiofréquence s'effectue dans la bande des UHF et tout spécifiquement dans la gamme comprise entre 860 et 960Mhz.

En effet, dans cette bande de fréquences, la longueur de l'antenne rayonnante dipôle est inversement proportionnelle à la fréquence de communication. Et au-delà de cette bande de fréquences, la communication radioélectrique est fortement perturbée, voire impossible, dans les matériaux élastomères standards. De ce fait, cela constitue le meilleur compromis entre la taille du transpondeur radiofréquence dimensionné par la longueur de l'antenne dipôle et sa communication radioélectrique notamment en champ lointain permettant d'avoir des distances de communication satisfaisantes dans le domaine du pneumatique.

Selon un autre mode de réalisation particulier, la longueur L de la mise en hélice du premier fil de couverture primaire du transpondeur radiofréquence passif suivant le premier axe principal est comprise entre 30 et 80 millimètres.

En effet, dans la gamme de fréquences entre 860 et 960 MHz et selon les permittivités diélectriques relatives des mélanges élastomères entourant le transpondeur radiofréquence, la longueur totale du ressort hélicoïdal qui est adaptée à la demi longueur d'onde des ondes radioélectrique émises ou reçues par le transpondeur radiofréquence est située dans la fourchette entre 30 et 80 millimètres, de préférence entre 35 et 70 millimètres. Afin d'optimiser le fonctionnement de l'antenne rayonnante à ces longueurs d'ondes, il convient de parfaitement adapter la longueur de l'antenne dipôle demi-onde à la longueur d'onde. A cela il faut ajouter la longueur de la puce électronique et éventuellement celle de la boucle servant à l'adaptation d'impédance de l'ensemble.

Avantageusement, le diamètre D d'enroulement du ressort hélicoïdal est compris entre 0,6 et 2,0 millimètres, préférentiellement entre 0,6 et 1,6 millimètre.

Cela permet de limiter le volume occupé par l'antenne dipôle demi-onde est donc d'augmenter l'épaisseur du dispositif d'isolation électrique autour du transpondeur radiofréquence. Bien entendu ce diamètre du ressort hélicoïdal peut être constant, variable, continûment variable ou variable par morceaux. Il est préférable du point de vue de l'intégrité mécanique de l'antenne rayonnante que le diamètre soit constant ou continûment variable.

Selon un mode de réalisation privilégié, le pas d'hélice de l'antenne rayonnante est compris entre 1,0 et 4,0 millimètres et, de préférence, entre 1,0 et 2,0 millimètres.

Cela permet d'une part d'assurer que le rapport du pas d'hélice sur le diamètre d'enroulement du ressort, ou au moins une boucle, dans la première zone de l'antenne rayonnante, est compris entre 0,8 et 3 garantissant un minimum d'élongation du ressort hélicoïdal tout en assurant une performance radioélectrique satisfaisante aussi bien en émission qu'en réception. De plus, ce pas peut aussi être constant ou variable sur toute l'antenne rayonnante. Bien entendu, il est préférable que le pas soit continûment variable ou avec des transitions de faible variation pour éviter des points singuliers dans l'antenne rayonnante qui représenteraient des faiblesses mécaniques de l'antenne rayonnante.

Selon un mode de réalisation avantageux, le diamètre des éléments filaires conducteurs est compris entre 0,08 et 0,11 millimètres.

Dans cette gamme, on garantit d'une part que la résistance des pertes sera faible, améliorant ainsi les performances radioélectriques de l'antenne rayonnante. De plus, ces tailles de diamètre permettent une fixation de l'élément filaire conducteur sur une puce électronique au travers de la technologie e-tread. Cependant, il est nécessaire de conserver une certaine résistance mécanique au fil pour supporter les contraintes thermomécaniques qu'il subira dans un environnement fortement sollicitant comme l'enveloppe pneumatique, sans optimiser la limite à rupture du matériau de ces fils, généralement en acier doux. Cela permet d'assurer un compromis technico-économique satisfaisant de l'antenne rayonnante.

### Description brève des dessins

L'invention sera mieux comprise au moyen de la description détaillée qui suit. Ces applications sont données uniquement à titre d'exemple et faites en se référant aux figures annexées sur lesquelles les mêmes numéros de référence désignent partout des parties identiques, et dans lesquelles :

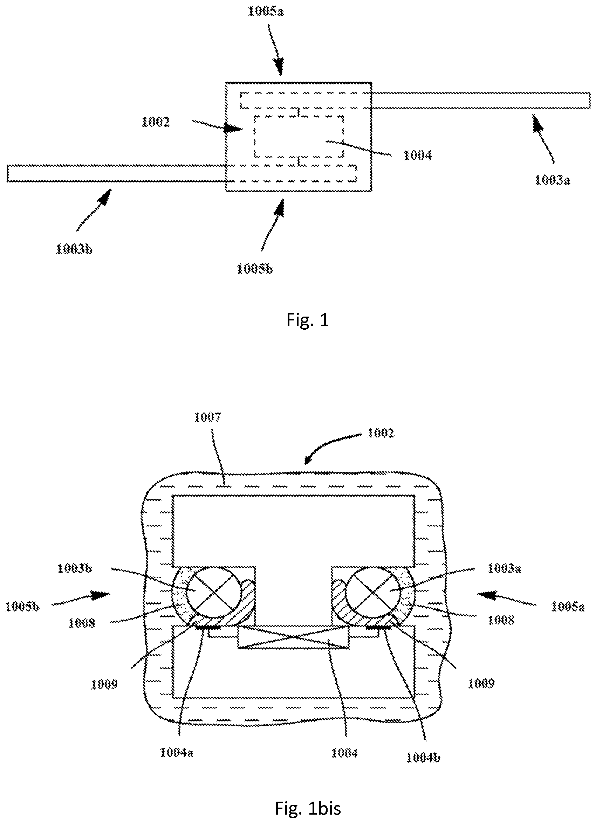

- La Fig. 1 présente un schéma de la partie électronique d'un transpondeur radiofréquence selon l'invention ;
- La Fig. 1bis présente une vue en coupe de la partie électronique du transpondeur radiofréquence de la Fig 1 au niveau de la puce électronique ;
- La Fig. 2 est un schéma de la partie électronique du transpondeur radiofréquence selon l'invention selon un second mode de réalisation ;
- La Fig. 3 est un exemple de mise en hélice de la partie électronique du transpondeur radiofréquence selon l'invention ;
- La Fig. 4 est un exemple de mise en hélice selon un autre mode de réalisation de la partie électronique du transpondeur radiofréquence selon l'invention ;
- La Fig. 5 est une vue éclatée d'un transpondeur radiofréquence passif dans un premier mode de réalisation du dispositif d'isolation électrique selon l'invention ;
- La Fig. 6 est une vue en perspective d'un transpondeur radiofréquence passif dans un second mode de réalisation du dispositif d'isolation électrique selon l'invention ;
- La Fig. 7 est une vue en coupe méridienne d'une enveloppe pneumatique de l'état de la technique ;
- La Fig. 8 est une vue en coupe méridienne du bourrelet et du flanc d'une enveloppe pneumatique selon l'invention lorsque le transpondeur radiofréquence passif est localisé au niveau de la zone extérieure de l'enveloppe pneumatique ;
- La Fig. 9 est une vue en coupe méridienne du bourrelet et du flanc d'une enveloppe pneumatique selon l'invention lorsque le transpondeur radiofréquence passif est localisé au niveau de la zone intérieure de l'enveloppe pneumatique ;
- La Fig. 10 est une vue en coupe méridienne d'une enveloppe pneumatique comprenant deux couches d'armature de carcasse ;
- La Fig. 11 est une vue en coupe méridienne d'une enveloppe pneumatique comprenant un insert de flanc pour le roulage en mode étendu équipée d'un transpondeur radiofréquence passif ; et
- La Fig. 12 est une vue en coupe méridienne du bourrelet et d'un flanc d'une enveloppe pneumatique selon l'invention lorsque le transpondeur radiofréquence passif est localisé dans la zone intérieure de l'enveloppe pneumatique.

### Description détaillée de modes de réalisation

Dans ce qui suit, les termes « pneumatique » et « bandage pneumatique » sont employés de façon équivalente et concernent tout type de bandage avec ou sans gaz de gonflage (en anglais « tire », « pneumatic tire », « non-pneumatic tire »).

Dans Fig. 1, une puce 1002 est connectée à deux éléments filaires conducteurs 1003a et 1003b qui définissent le premier axe longitudinal du transpondeur radiofréquence passif. Pour cela, la puce1002 comprend deux rainures 1005a et 1005b dans lesquels sont insérés respectivement les éléments filaires conducteurs 1003a et 1003b qui s'étendent chacun d'un côté de la puce 1002 pour former une antenne dipôle demi-onde. La puce 1002 comprend aussi un composant d'émission-réception radiofréquence 1004.

Dans Fig. 1bis, on observe une vue en coupe détaillée de la partie électronique du transpondeur radiofréquence passif de la Fig. 1. La puce 1002 comprend un composant d'émission-réception radiofréquence 1004. Les éléments filaires conducteurs 1003a et 1003b sont reliés au composant d'émission-réception radiofréquence 1004 par l'intermédiaire respectivement de bornes de connexion 1004a et 1004b disposés respectivement dans les rainures 1005a et 1005b. La liaison galvanique peut être favorisée par l'intermédiaire d'une soudure ou d'une brasure 1009. Pour rendre robuste la connexion galvanique au niveau des rainures 1005a et 1005b, il est possible de déposer un adhésif 1008 dans les rainures 1005a et 1005b et sur les parties des éléments filaires conducteurs 1003a et 1003b au niveau de ces rainures 1005a et 1005b. On peut aussi prévoir d'encapsuler la puce 1002 d'un matériau de protection 1007, telle qu'une résine de type époxy par exemple, pour protéger cette puce 1002 aussi bien mécaniquement que chimiquement.

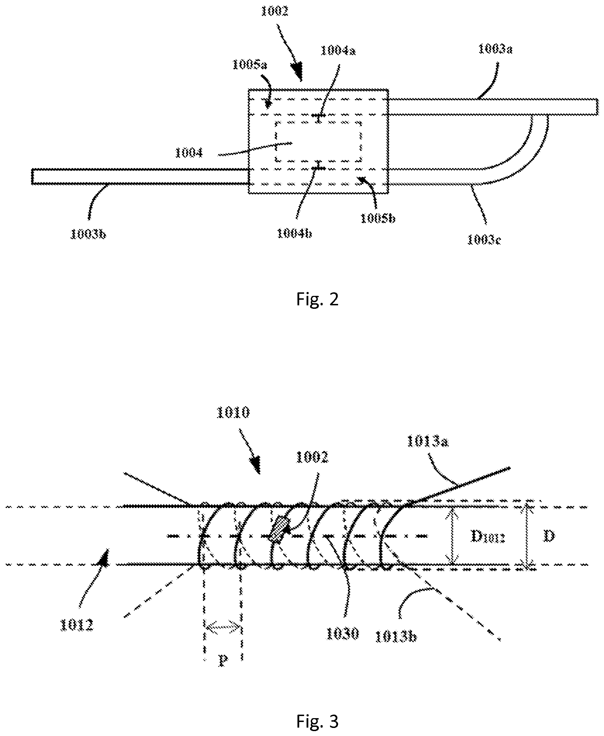

La Fig. 2 présente la partie électronique d'un transpondeur radiofréquence passif selon l'invention dans un second mode de réalisation optionnel dans lequel, la puce 1002 est connectée à une boucle fermée afin d'adapter l'impédance de l'antenne dipôle demi-onde constituée par les éléments filaires conducteurs 1003a et 1003b à celle de la puce électronique 1002. Cette boucle est obtenue en connectant l'une à l'autre une portion d'un élément filaire conducteur, dans cet exemple l'élément 1003a, et un troisième élément filaire conducteur 1003c. L'autre extrémité du troisième élément filaire conducteur 1003c est connectée à la puce 1002 au niveau de la rainure 1005a. En fait industriellement, il est possible d'utiliser un seul élément filaire conducteur 1003b de plus grande dimension afin que celui-ci ait une longueur suffisante pour constituer à la fois un brin d'antenne de longueur un quart de longueur d'onde et l'élément filaire 1003c. De plus, il est possible aussi d'employer une puce de connexion électrique 1002bis,( non représentée) afin de lier galvaniquement la première extrémité du troisième élément filaire 1003c à l'élément filaire conducteur 1003a. Dans ce contexte, la longueur du deuxième élément filaire conducteur 1003a comprend d'une part un brin d'antenne de longueur un quart d'onde et une partie de la boucle entre les deux puces 1002 et 1002bis. Ces astuces rendent la fabrication industrielle de la partie électronique du transpondeur radiofréquence passif robuste et productive. La boucle fermée constituée dans ce cas, d'une partie de l'élément filaire conducteur 1003a entre les puces 1002 et 1002bis, de l'élément filaire 1003c et de la seconde puce de connexion 1002bis, étant réglée pour adapter l'impédance électrique de l'antenne dipôle demi onde constituée par l'élément filaire conducteur 1003b et l'autre partie de l'élément filaire conducteur 1003a à celle de la puce électronique 1002. La puce électronique 1002 et la boucle fermée sont recouvertes d'un matériau de protection isolant électriquement telle qu'une résine de type époxy par exemple, permettant de protéger la boucle mécaniquement et chimiquement tout en assurant une stabilité de l'environnement électrique du système. Cette protection assure une stabilité de fonctionnement de la boucle fermée, elle peut être constitué de la superposition d'une résine assurant la protection mécanique et chimique recouvert d'une seconde résine isolante de type DELO AD 465.

La Fig. 3 représente la mise en hélice 1010 de la partie électronique du transpondeur radiofréquence passif selon un premier mode de réalisation. Toute d'abord on constitue une âme principale 1012, qui peut être un fil extensible en caoutchouc naturel ou synthétique comme par exemple en polyuréthane ou en élastane, ou non extensible d'un diamètre D₁₀₀₂ inférieur à 2 millimètres. Dans cet exemple, il s'agit d'un fil de polyacrylate 940 HT qui est du nylon d'un diamètre plein de 0,5 millimètre. On entoure cette âme principale 1012 par un premier fil de couverture primaire 1013a et dans cet exemple d'un second fil de couverture primaire 1013b. Ce fil de couverture primaire 1013a comprend la partie électronique du transpondeur radiofréquence passif. Cette partie électronique comprend au moins les éléments filaires conducteurs 1003a, 1003b, et la puce électronique 1002. Les éléments filaires conducteurs 1003a et 1003b sont ici des fils métalliques, multi filaments ou monobrin d'un diamètre inférieur à 0,15 millimètres, préférentiellement inférieur à 0,11 millimètres. Ici c'est un fil mono filament en acier recouvert d'une couche en laiton qui permet la conduction des charges électriques en surface et qui est soudable à la puce électronique 1002 par l'intermédiaire d'une brasure dans le cas du procédé e-tread. L'enroulement du premier fil de couverture primaire 1013a est effectuée par guipage du premier fil de couverture primaire 1013a autour de l'âme principale 1012 permettant d'obtenir un diamètre d'enroulement D du premier fil de couverture primaire 1013a compris entre 0,5 millimètres et 1,0 millimètres avec un pas d'hélice variant de 0,8 à 3 millimètres. Ainsi on a constitué une antenne dipôle demi-onde dont l'axe de l'hélice représente le premier axe longitudinal 1030 du transpondeur radiofréquence passif. Bien entendu, d'autres procédés de mise en hélice du fil de couverture primaire 1013a peuvent aussi être employés pour réaliser la mise en hélice de la partie électronique du transpondeur radiofréquence passif comme le retordage par exemple. Un second fil de couverture primaire 1013b est mis en hélice autour de l'âme principale 1012 et du premier fil de couverture primaire 1013a. Sa fonction est de rendre solidaire mécaniquement l'ensemble constitué par l'âme principale 1012 et le fil de couverture primaire 1013a comprenant la partie électronique du transpondeur radiofréquence passif. Ainsi, on préserve la géométrie de la mise en hélice 1010 du premier fil de couverture primaire 1013a. L'enroulement de ce second fil de couverture primaire 1013b, qui est généralement un fil textile est préférentiellement opposé à celui du premier fil de couverture primaire 1013a, de manière à équilibrer les contraintes, en particulier de torsion, qu'ils peuvent engendrer dans le système ainsi conçu. Le second fil de couverture primaire 1013b est optionnel dans notre cas puisque l'élément filaire conducteur 1013a est ici en acier qui, de par sa mise en hélice, se déformera plastiquement. Ainsi, la géométrie de la mise en hélice 1010 du premier fil de couverture primaire 1013a est figée par cette plasticité du matériau.

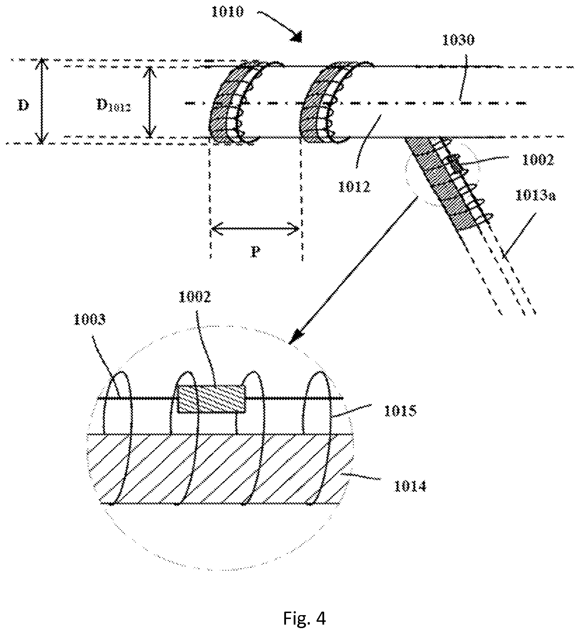

La Fig. 4 est une mise en hélice 1010 de la partie électronique du transpondeur radiofréquence passif selon un mode de réalisation préférentiel. Cette fois-ci, avant la mise en hélice du premier fil de couverture primaire 1013a, celui-ci est renforcé par l'intermédiaire d'une âme tertiaire 1014. En effet, lors d'une étape préparatoire à la mise en hélice, la partie électronique du transpondeur radiofréquence passif est associée à une âme tertiaire 1014 afin de diminuer les contraintes thermomécaniques transitant dans les éléments filaires conducteurs 1003a et 1003b, en particulier au niveau des zones de connexions de ceux-ci avec la puce électronique 1002. Pour cela, la partie électronique est disposée colinéairement à une âme tertiaire 1014 à laquelle elle est rendu solidaire. Cette liaison solidaire est ici réalisée par l'intermédiaire d'un fil de couverture tertiaire 1015 en textile mis en hélice autour de l'âme tertiaire 1014 et de la partie électronique du transpondeur radiofréquence passif. Bien entendu, il est possible d'équilibrer les contraintes de ce fil de couverture primaire 1013a par l'intermédiaire d'un second fil de couverture tertiaire dont l'enroulement est opposé au premier fil de couverture tertiaire 1015. De plus, ce double enroulement garantit une meilleure cohésion entre l'âme tertiaire 1014 et la partie électronique du transpondeur radiofréquence. La présence de cette âme tertiaire 1014 garantit une diminution des contraintes circulant dans les éléments filaires conducteurs 1003a et 1003b de la partie électronique en multipliant les chemins de passage des efforts. De plus, elle rend robuste la manipulation du fil de couverture primaire 1013a notamment par des automates ce qui améliore la productivité de la mise en hélice de la partie électronique du transpondeur radiofréquence passif. Nécessairement, l'âme tertiaire 1014 est isolante électriquement pour ne pas perturber le fonctionnement de la partie électronique du transpondeur radiofréquence passif. Il est préférable que l'âme tertiaire 1014 soit inextensible et plus rigide que les éléments filaires conducteurs 1003a et 1003b afin de diminuer les déformations et les contraintes dans les éléments filaires conducteurs 1003a et 1003b et garantir une stabilité géométrique à la mise en hélice 1010 de la partie électronique du transpondeur radiofréquence passif.

La mise en hélice de la partie électronique du transpondeur radiofréquence passif définit un premier axe longitudinal 1030, un diamètre d'enroulement D qui est nécessairement supérieure ou égale au diamètre du cercle circonscrit de l'âme principale 1012 et un pas d'hélice P. Le réglage de ces deux derniers paramètres de la mise en hélice permet à la fois de garantir une capacité de déformation de l'hélice 1010 minimisant les efforts transitant dans le fil de couverture primaire 1013a et d'adapter l'impédance de l'antenne dipôle demi-onde constituée par les éléments filaires conducteur 1003 à celle de la puce électronique 1002 ce qui permet d'optimiser la communication radiofréquence du transpondeur radiofréquence passif.

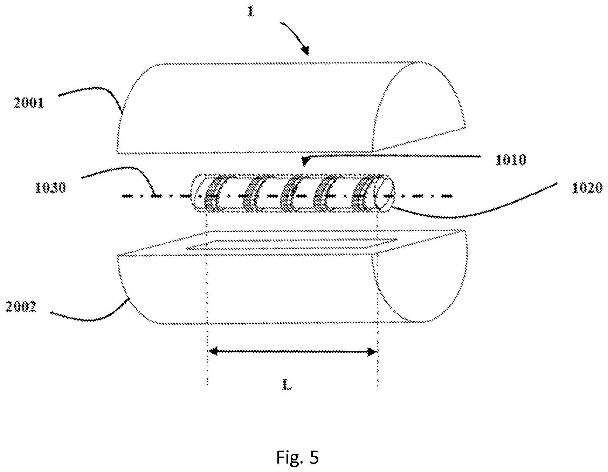

La Fig. 5 est une vue en perspective en éclaté d'un transpondeur radiofréquence passif 1 selon un premier mode de réalisation. Ce transpondeur radiofréquence 1 se présente sous la forme d'un premier sous ensemble 1010 enveloppé dans un dispositif d'isolation électrique. Le sous-ensemble 1010, correspondant à la mise en hélice de la partie électronique du transpondeur radiofréquence passif 1, est constitué ici par un premier fil de couverture primaire mis en hélice autour d'une âme principale. Le premier fil de couverture primaire comprend les éléments filaires conducteurs dont deux forment l'antenne dipôle demi-onde et au moins une puce électronique connectée à ses bornes par les éléments filaires conducteurs. Dans cet exemple, une boucle fermée est réalisée par l'intermédiaire d'un troisième élément filaire conducteur et une puce de connexion selon le principe présentée à la Fig. 2. La longueur L de la mise en hélice 1010 du premier fil de couverture primaire, correspondant à la partie électronique, du transpondeur radiofréquence passif 1 est de l'ordre de 60 millimètres compris entre 30 et 80 millimètres. L'hélice est construite autour d'une âme principale de diamètre extérieur de 0,5 millimètre avec un pas d'hélice de l'ordre de 1millimètre. Cette géométrie d'hélice permet d'adapter l'impédance de l'antenne dipôle demi-onde à celle de la puce électronique équipée de sa boucle fermée. Le sous ensemble 1010 est positionnée au centre du dispositif d'isolation électrique du fait de l'homogénéité diélectrique du dispositif d'isolation électrique. Dans cet exemple, la mise en hélice 1010 de la partie électronique du transpondeur radiofréquence passif 1 est recouverte par un promoteur d'adhésion 1020. Ce promoteur d'adhésion 1020 garantit une meilleure cohésion entre le fil de couverture externe de la mise en hélice 1010 de la partie électronique du transpondeur radiofréquence passif 1, qui est ici un premier fil de couverture primaire, avec les mélanges élastomères adjacents à ce fil de couverture externe.

Le dispositif d'isolation électrique est constituée ici par deux masses 2001 et 2002 en mélange élastomère dont la permittivité diélectrique relative est inférieure à 5. L'épaisseur du dispositif d'isolation électrique radialement extérieure au fil de couverture externe par rapport à l'axe principale longitudinal 1030 est de 3 millimètres, bien au-delà du sixième du diamètre d'enroulement, ici de l'ordre de 1 à 2 millimètres de la mise en hélice de la partie électronique du transpondeur radiofréquence passif 1. Cela garantit une zone d'isolation électrique autour de l'antenne dipôle demi-onde suffisante pour une bonne efficacité de communication radiofréquence.

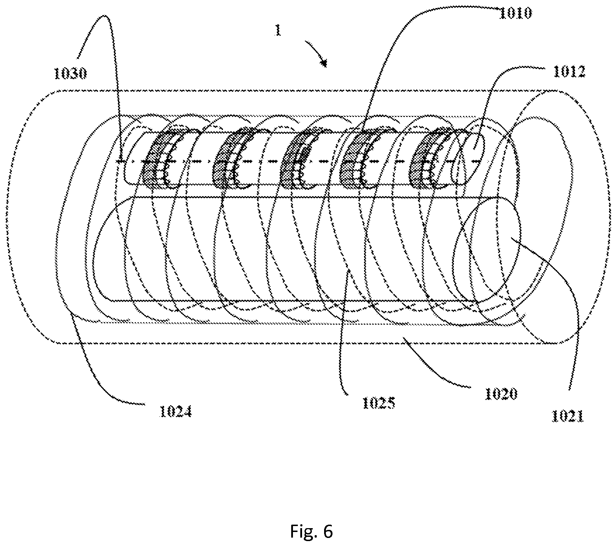

La Fig. 6 est une vue en perspective, réalisée en partie de façon schématique, du transpondeur radiofréquence passif 1 selon un autre mode de réalisation dans lequel le dispositif d'isolation électrique est constituée par des fils de couvertures secondaires en textile 1024 et 1025.

Le transpondeur radiofréquence passif 1 est ici constitué d'une mise en hélice 1010 de la partie électronique autour d'une âme principale 1012 définissant un premier axe longitudinal 1030. Cette mise en hélice 1010 est réalisé par un unique fil de couverture primaire comprenant une âme tertiaire colinéairement disposée par rapport aux deux éléments filaires conducteurs définissant l'antenne dipôle demi-onde dont l'une des extrémités est connecté à une puce électronique. Le dispositif d'isolation électrique est constitué ici d'une âme secondaire 2021 disposée colinéairement à la mise en hélice 1010 de la partie électronique du transpondeur radiofréquence passif 1. Cette âme secondaire 2021 est ici pleine et isolante électriquement avec une permittivité diélectrique relative inférieure à 10, elle est constituée d'un fil multi filaments de polyacrylate. Dans une autre variante, l'âme secondaire 1002 pourrait être creuse afin de permettre de recevoir à l'intérieur de son orifice tubulaire la mise en hélice 1010 de la partie électronique. Ici, elle est disposée parallèlement à l'axe principal longitudinal 1010. Ceci nécessite donc la présence de fil de couverture secondaire mis en hélice autour du sous ensemble 1010 et de l'âme secondaire 1021 qui rendra solidaire les deux composants entre eux garantissant ainsi la géométrie rectiligne de la mise en hélice 1010 de la partie électronique. Ce premier fil de couverture secondaire 1024 est représenté schématiquement par la ligne continue représentant sa fibre neutre. Afin d'équilibrer les contraintes, un second fil de couverture secondaire 1025 est enroulé autour des deux composants dans le sens opposé. Le doublement des fils de couverture secondaire garantit une meilleure cohésion de l'ensemble. De plus, cela assure une certaine épaisseur homogène d'isolation électrique autour de la partie électronique du transpondeur radiofréquence 1, bien supérieure au sixième du diamètre d'enroulement D de la mise en hélice 1010 de la partie électronique. En fait, une épaisseur de 3 à 4 millimètres d'isolation électrique constitue l'épaisseur seuil à partir de laquelle l'augmentation de l'épaisseur ne procure plus de gain en performance radioélectrique du transpondeur radiofréquence passif. Cette épaisseur seuil peut être obtenue par un unique fil de couverture secondaire de gros diamètres, une multitude de tour d'enroulement d'un même fil de diamètre plus petit ou une combinaison de plusieurs fils de couverture secondaire de diamètre intermédiaire comme ici.

Enfin, les fils de couverture secondaires 1024 et 1025 étant généralement en textile comme par exemple le polyacrylate, et étant disposés le plus radialement extérieurement par rapport à l'axe principal longitudinal 1030, ils constituent les fils de couverture externes surtout si ces fils ne sont pas jointifs. Il convient alors de les recouvrir d'un promoteur d'adhésion 1020 afin de garantir une meilleure cohésion entre les fils de couverture externes et les mélanges élastomères adjacents à ces fils de couverture externes. Dans ce cas, les mélanges élastomères adjacents sont des couches de l'enveloppe pneumatiques.

La direction circonférentielle du pneumatique, ou direction longitudinale, est la direction correspondant à la périphérie du pneumatique et définie par la direction de roulement de l'enveloppe pneumatique.

La direction transversale ou axiale du pneumatique est parallèle à l'axe de rotation ou axe de référence de l'enveloppe pneumatique.

La direction radiale est une direction coupant l'axe de révolution ou de référence de l'enveloppe pneumatique et perpendiculaire à celui-ci.

L'axe de rotation de l'enveloppe pneumatique est l'axe autour duquel il tourne en utilisation normale.

Un plan radial ou méridien est un plan qui contient l'axe de rotation du pneumatique.

Le plan médian circonférentiel, ou plan équatorial, est un plan perpendiculaire à l'axe de référence de l'enveloppe pneumatique et qui le divise en deux moitiés.

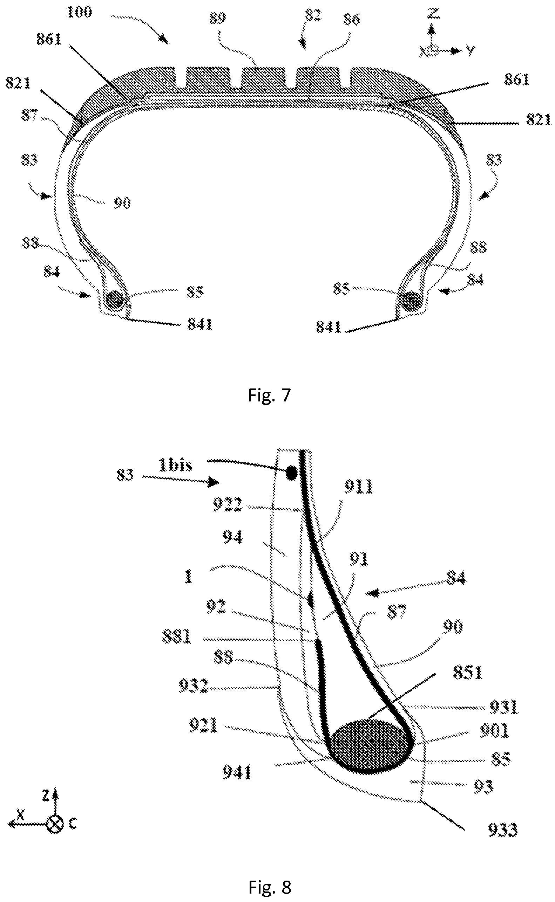

La Fig. 7 présente une coupe méridienne d'une enveloppe pneumatique 100 comportant un sommet 82 renforcé par une armature de sommet ou ceinture 86, deux flancs 83 et deux bourrelets 84. Le sommet 82 est délimité axialement par deux extrémités axiales 821 assurant la connexion avec chaque flanc 83 de l'enveloppe pneumatique 100. L'armature de sommet 86 s'étend axialement jusqu'à une extrémité axiale 861 sur chacun de ses bords. L'armature de sommet 86 est surmontée radialement extérieurement d'une bande de roulement en matériau élastomère 89. Chaque bourrelet 84 est renforcé avec une tringle 85. Une armature de carcasse 87 ancrée dans les bourrelets 84 sépare l'enveloppe pneumatique en deux zones que l'on nommera zone intérieure en direction de la cavité fluide et zone extérieure vers l'extérieur du pneumatique. L'armature de carcasse comprend une partie principale 87 qui est enroulée autour des deux tringles 85 dans chaque bourrelet 84. Le retournement 88 de cette partie principale de l'armature de carcasse 87 est ici disposé vers l'extérieur de l'enveloppe pneumatique 100. L'armature de carcasse est de manière connue en soi constituée d'au moins une couche renforcée par des câbles par exemple ici textiles, c'est-à-dire que ces câbles sont disposés pratiquement parallèles les uns aux autres. La partie principale 87 s'étend d'un bourrelet 84 à l'autre de manière à former un angle compris entre 80° et 90° avec le plan circonférentiel médian EP. Une couche de gomme intérieure étanche 90 (en anglais « inner liner ») s'étend d'un bourrelet 84 à l'autre radialement intérieurement relativement à la partie principale de l'armature de carcasse 87.

La Fig. 8 représente une vue de détail de l'enveloppe pneumatique 100 au niveau du bourrelet 84 et du flanc 83. Cette figure illustre le positionnement du transpondeur radiofréquence passif 1 dans la zone extérieure de l'enveloppe pneumatique 100 par rapport à la partie principale de l'armature de carcasse constituée, dans le cas représenté, par une seule couche de carcasse 87.

Le bourrelet 84 est constitué par la tringle 85 autour de laquelle s'enroule la partie principale de la couche de carcasse 87 avec une partie retournée 88 située dans la zone extérieure de l'enveloppe pneumatique 100. La partie retournée 88 de la couche carcasse se termine par un bord libre 881. Une quatrième couche de mélange caoutchouteux 91, nommée bourrage tringle, est située radialement extérieurement et de façon adjacente à la tringle 85. Elle présente un bord libre radialement extérieur 911 prenant appui sur une face de la partie principale de la couche de carcasse 87 (plus précisément sur le calandrage extérieur de la couche de carcasse, il n'y a pas de contact direct entre les câblés de la couche de carcasse et l'organe électronique). Une seconde quatrième couche de mélange caoutchouteux 92 nommée « bourrage de renfort » lui est adjacente. Elle possède deux bords libres. Le premier bord libre 921 est situé radialement intérieurement et prend appui sur la partie retournée 88 de la couche de carcasse. L'autre bord libre 922 est situé radialement extérieurement et se termine sur la face de la partie principale de la couche de carcasse 87. Enfin le flanc 83 est défini par l'intermédiaire d'une troisième couche de mélange élastomère 94 recouvrant à la fois la seconde quatrième couche de mélange élastomère 92 et la partie principale de la couche de carcasse 87. Le flanc défini par la surface externe de la troisième couche de mélange élastomère 94 qui possède un bord libre 941 situé radialement intérieurement et se terminant sur la partie retournée 88 de la couche de carcasse.

Sur la zone intérieure de l'enveloppe pneumatique 100 se trouve la gomme intérieure étanche 90 qui est adjacente à la partie principale de la couche de carcasse 87 dans cette configuration. Elle se termine par un bord libre 901 adjacent à la partie principale de la couche de carcasse 87. Enfin une deuxième couche de mélangé élastomère 93, nommé protecteur talon, vient protéger la couche de carcasse et les extrémités radialement intérieures 901, 921 et 941 respectivement de la gomme intérieure étanche 90, de la seconde quatrième couche de mélange élastomère 92 et de la troisième couche de mélange élastomère 94. La face extérieure de cette deuxième couche de mélange élastomère 93 est apte à être en contact direct avec le crochet de jante lors du montage de l'enveloppe pneumatique 100 sur la roue. Cette deuxième couche de mélange élastomère 93 présente trois extrémités libres formant un angle. La première extrémité libre 931 est située dans la zone intérieure de l'enveloppe pneumatique 100. La seconde extrémité libre 932 est située dans la zone extérieure de l'enveloppe pneumatique 100. Enfin, la troisième extrémité libre 933 constitue l'extrémité intérieure 841 du bourrelet 84.

Un bourrelet 84 et le flanc 83 qui lui est relié de cette enveloppe pneumatique 100 est équipé de transpondeurs radiofréquences passifs, numérotés 1 avec éventuellement des indices, situés dans la zone extérieure de l'enveloppe pneumatique 100. Le premier transpondeur radiofréquence passif 1 est positionné sur la face extérieure de la quatrième couche de mélange élastomère ou bourrage tringle 91. Il est positionné à une distance de 10 millimètres du bord libre 881 de la partie retournée 88 de la couche de carcasse qui constitue une singularité mécanique. Ce positionnement assure une zone de stabilité mécanique pour le transpondeur radiofréquence 1 qui est bénéfique à son endurance mécanique. De plus, son enfouissement au sein même de la structure de l'enveloppe pneumatique 100 lui assure une bonne protection aux agressions mécaniques en provenance de l'extérieur de l'enveloppe pneumatique 100.

Généralement, il est préférable de positionner le transpondeur radiofréquence passif à une distance radiale comprise entre 20 à 40 millimètres de l'extrémité radialement extérieure de la tringle 85 afin d'être dans une zone stable mécaniquement de l'enveloppe pneumatique en service, ce qui assure une intégrité physique du transpondeur radiofréquence. De plus, ce positionnement garantit d'être radialement à l'extérieur du crochet de jante, ce qui permet une bonne performance de radiocommunication en limitant les perturbations liées à la nature souvent métallique de la roue.

Le deuxième transpondeur radiofréquence 1bis est positionné à l'intérieur de la troisième couche de mélange élastomère 94. La similarité de matériau entre la troisième couche de mélange élastomère 94 et le mélange élastomère définissant le dispositif d'isolation électrique du transpondeur radiofréquence passif ou la présence sur la surface extérieure du transpondeur radiofréquence d'un promoteur d'adhésion assure une mise en place au sein du flanc 83 du transpondeur radiofréquence 1bis au cours du procédé de cuisson. Le transpondeur radiofréquence 1bis est simplement déposé au sein du matériau par l'intermédiaire d'une fente sur la face extérieure à cru de la troisième couche de mélange élastomère 94 au cours de la confection de l'enveloppe pneumatique 100. La mise sous pression de l'ébauche cru dans le moule de cuisson assure le positionnement du transpondeur radiofréquence 1bis à l'état cuit tel que représenté. Ce transpondeur radiofréquence 1bis est situé loin de tout bord libre d'un autre constituant de l'enveloppe pneumatique 100 quasiment à l'équateur du flanc 83 assurant la plus grande distance de communication radiofréquence. En particulier il est éloigné du bord libre 932 du protecteur talon, du bord libre 881 du retournement de la couche de carcasse 88 et des bords libres 911 et 922 des gommes de bourrage. Son positionnement assure une performance de communication accrue avec un lecteur radiofréquence externe d'autant plus avec la forme spécifique de l'antenne dipôle rayonnante du transpondeur radiofréquence passif. Les sollicitations cycliques lors du roulage ne seront pas gênantes en raison de la mise en hélice et la miniaturisation de la partie électronique du transpondeur radiofréquence passif 1bis. Nécessairement ces deux transpondeurs sont situés axialement extérieurement à l'extrémité 933 de la deuxième couche de mélange caoutchouteux 93 et donc de l'extrémité radialement intérieure du bourrelet 84. Ils sont positionnés radialement entre l'extrémité 851 radialement extérieure de la tringle 85 par rapport à l'axe de référence de l'enveloppe pneumatique 100 et les extrémités axiales 861 de l'armature de sommet 86. L'orientation du transpondeur radiofréquence passif est ici circonférentielle bien que la seule contrainte soit que le premier axe longitudinal du transpondeur radiofréquence repose sur au moins deux éléments de renforcement de la partie principale de la couche d'armature de carcasse 87.

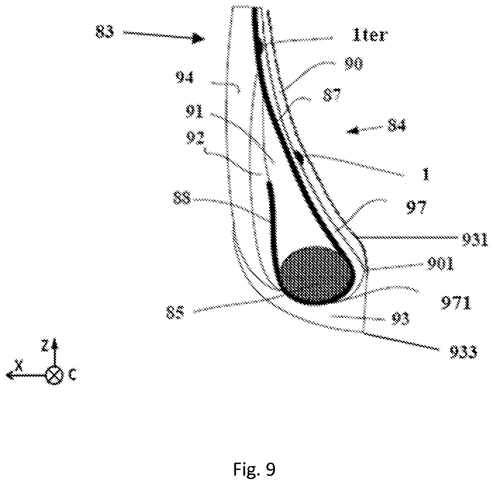

La Fig. 9 représente une coupe méridienne de détail d'une enveloppe pneumatique 100 au niveau du bourrelet 84 et du flanc 83. Cette Fig. 9 illustre le positionnement du transpondeur radiofréquence passif dans la zone intérieure de l'enveloppe pneumatique 100 par rapport à la partie principale de l'armature de carcasse 87.

L'enveloppe pneumatique 100 comprend en particulier au niveau de la zone intérieure, une gomme intérieure étanche 90 et une couche d'armature de renforts 97 intercalée entre la partie principale de la couche de carcasse 87 et la gomme intérieure étanche 90. Ce composant 97 présente un bord libre 971 radialement intérieur localisée radialement à l'intérieur de la tringle 85. Cette couche de renforts 97 s'étend d'un bourrelet 84 à l'autre bourrelet 84 de l'enveloppe pneumatique 100.

La localisation du transpondeur radiofréquence 1 au niveau de l'interface entre la gomme intérieure étanche 90 et la couche de renforts 97 permet une stabilisation mécanique du transpondeur radiofréquence 1. Celle-ci est radialement à l'extérieur d'environ 40 millimètres du bord libre 931 du protecteur talon 93, ce qui permet de la positionner radialement à l'extérieur du crochet de jante lorsque l'enveloppe pneumatique montée sur une roue est en service. D'un point de vue endurance mécanique, cette localisation est idéale pour le transpondeur radiofréquence passif 1 qui est protégé de toute agression mécanique externe et de toute agression thermomécanique interne. Son orientation est quelconque pourvu que le transpondeur radiofréquence passif 1 selon le premier axe longitudinal repose sur au moins deux éléments de renforts de la couche d'armature de carcasse 87 et, le composant 97 étant une couche d'armature de renforts, sur plusieurs éléments de renforts de la couche de renforts 97. Cela assure un positionnement axial du transpondeur radiofréquence 1 par rapport à l'épaisseur de l'enveloppe pneumatique 100 permettant d'accorder de façon robuste la résonance de l'antenne rayonnante du transpondeur radiofréquence passif 1 lorsque celui-ci est intégré dans l'enveloppe pneumatique 100. De plus, il faut respecter une distance d'au moins 0,5 millimètres entre le fil de couverture externe du transpondeur radiofréquence passif 1 et les éléments de renforcement de la couche d'armature de carcasse 87 ou de la couche d'armature de renfort 97 pour préserver l'intégrité physique des fils de couverture du transpondeur radiofréquence et/ou des éléments de renforcement des couches d'armature. A cet effet, il est préférable d'employer un transpondeur radiofréquence passif 1 selon le mode de réalisation du dispositif d'isolation électrique de la Fig. 5.

La seconde localisation du transpondeur radiofréquence 1ter selon l'invention permet une meilleure performance radiocommunication en étant placé radialement plus à l'extérieur dans l'enveloppe pneumatique 100. Toutefois, il est conseillé de positionner le premier axe longitudinal, c'est-à-dire l'antenne rayonnante, de sorte que le transpondeur radiofréquence 1ter repose sur au moins deux éléments de renforts de la couche de carcasse 87. Ici, dans cet exemple, le premier axe longitudinal est placé circonférentiellement. Il est préférable de positionner le transpondeur radiofréquence passif 1ter à l'interface définie par au moins deux composants de l'enveloppe pneumatique 100. Cela rend infalsifiable l'information contenue dans la puce électronique du transpondeur radiofréquence passif lorsque celle-ci est bloquée en écriture après la première écriture sur la mémoire associée à la puce électronique. Enfin, il faut éloigner les fils de couverture externe du transpondeur radiofréquence passif 1 des éléments de renforcement des couches de l'enveloppe pneumatique d'au moins 0, 5 millimètres.

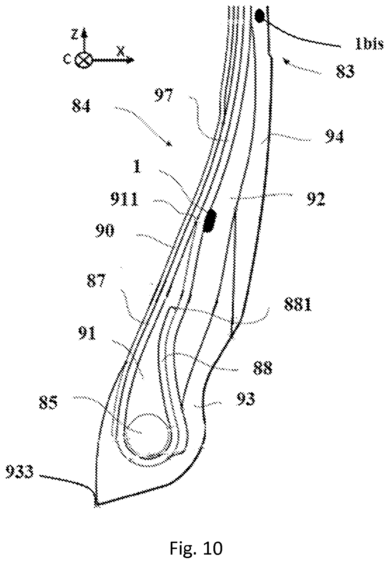

La Fig. 10 représente une coupe méridienne d'une enveloppe pneumatique 100. Cette enveloppe pneumatique 100 comprend usuellement un sommet, deux flancs 83 et deux bourrelets 84. Ne sont représentés à la Fig. 10 que la partie radialement intérieure d'un flanc 83 et un bourrelet 84. Le bourrelet 84 représenté à la Fig. 10 comprend une tringle de révolution 85, une partie principale d'une première couche de carcasse 87 s'étendant du flanc 83 vers la tringle 85 prolongée par un retournement 88 enroulé autour de la tringle 85 et s'étendant radialement extérieurement jusqu'à une extrémité 881. Ce retournement 88 est disposé axialement vers l'extérieur du bourrelet 84 de l'enveloppe pneumatique 100. Une quatrième couche de mélange élastomère 91, appelée gomme de bourrage, est disposée radialement extérieurement relativement à la tringle 85 et axialement entre la partie principale 87 et le retournement 88 de la première couche de carcasse. Cette gomme de bourrage 91 s'étend radialement extérieurement jusqu'à une extrémité 911. Il est à noter que l'extrémité 911 de la gomme de bourrage est située radialement extérieurement relativement à l'extrémité 881 du retournement 88.

Le bourrelet 84 comprend aussi une deuxième couche de carcasse ou couche de renfort 97 s'étendant sur la figure du flanc 83 jusqu'à la tringle 85. Cette deuxième couche de carcasse 97 est disposée axialement extérieurement relativement à la partie principale de la première couche de carcasse 87, à la gomme de bourrage 91 et au retournement 88 de la première couche de carcasse. Les deux couches de carcasse (87, 97) sont de manière connue en soi constituées de nappes renforcées par des câbles dits « radiaux », par exemple ici textiles, c'est-à-dire que ces câbles sont disposés pratiquement parallèles les uns aux autres et s'étendent d'un bourrelet à l'autre de manière à former un angle compris entre 80° et 90° avec le plan circonférentiel médian EP de l'enveloppe pneumatique. Une couche de mélange élastomère étanche 90 (en anglais « inner liner ») située intérieurement à l'enveloppe pneumatique s'étend d'un bourrelet 84 à l'autre radialement intérieurement relativement à la partie principale de la première couche de carcasse 87. Le bourrelet 34 comporte une deuxième couche de mélange élastomère ou gomme protectrice (ou « protecteur », en anglais « cushion gum ») 93 apte à être en contact avec la surface d'une jante. Cette gomme protectrice 93 s'étend radialement extérieurement jusqu'à une interface avec une troisième couche de mélange élastomère 94 dont la surface externe définit le flanc 83. La gomme protectrice 93 et la gomme de flanc 94 constituent la couche extérieure de l'enveloppe pneumatique. Le bourrelet 84 comporte aussi une deuxième quatrième couche de mélange élastomère ou gomme de bourrage additionnelle 92 disposée axialement entre la deuxième couche de carcasse 97 d'une part, la gomme protectrice 93 et la gomme de flanc 94 d'autre part.

Le bourrelet 84 comporte aussi un transpondeur radiofréquence passif 1 disposé axialement à l'interface entre la deuxième couche de carcasse 97 et la gomme de bourrage additionnelle 92 et radialement entre l'extrémité 911 de la gomme de bourrage 91 et l'extrémité 881 du retournement 88 de la première couche de carcasse 87. Ici, le transpondeur radiofréquence 1 est positionné radialement extérieurement par rapport à l'extrémité radialement extérieure de la tringle 85 à une distance de 40 millimètres. Et, il faut éloigner les fils de couverture externe du transpondeur radiofréquence passif 1 des éléments de renforcement des couches de l'enveloppe pneumatique d'au moins 0, 5 millimètres.

La Fig. 10 présente aussi le positionnement d'un second transpondeur radiofréquence passif 1bis à l'intérieur de la troisième couche de mélange élastomère 94 situé à proximité de l'équateur de l'enveloppe pneumatique. Cette seconde position permet d'améliorer la performance de communication d'un transpondeur radiofréquence en service sur un véhicule puisque cette position éloigne le transpondeur radiofréquence passif des éléments électro conducteurs du véhicule (roue, passage de roue).

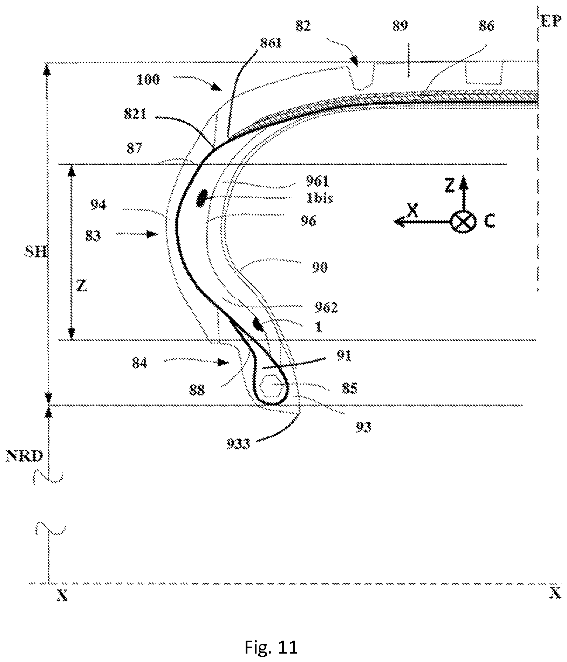

La Fig. 11 illustre en coupe axiale partielle un pneumatique 100, apte à un roulage à plat, équipé d'un transpondeur radiofréquence passif selon l'invention. Cette Fig. 11 indique aussi la hauteur de section SH de l'enveloppe pneumatique 100, c'est-à-dire la distance radiale entre le diamètre nominal de la jante de montage du pneumatique NRD et la partie radialement la plus extérieure de la bande de roulement 89 de l'enveloppe pneumatique 100. Dans le cadre de ce document, on prend comme diamètre nominal de la jante de montage du pneumatique, le diamètre de l'enveloppe pneumatique tel qu'indiqué par sa dimension.

L'enveloppe pneumatique 100 est représenté à l'état libre, c'est-à-dire non montée sur une jante de telle sorte que la largeur entre les deux bourrelets 84 est ramenée à la largeur de la jante nominale ETRTO.

En ce qui concerne la direction axiale, on entend par « axialement extérieur » une direction axiale dirigée vers l'extérieur du pneumatique et par « axialement intérieur » une direction axiale dirigée vers le plan médian EP de l'enveloppe pneumatique 100.

L'enveloppe pneumatique illustrée à la Fig. 11 est un pneumatique apte au roulage à plat, mais il est choisi à titre purement illustratif et le transpondeur radiofréquence passif décrit peut être intégré dans et à la surface de tous types de pneumatiques.

La moitié du pneumatique 100 apte au roulage à plat comporte un sommet 82, délimité par une extrémité axiale 821 à chacun de ses bords, renforcé par une armature de sommet ou ceinture 86 délimité par une extrémité axiale 861 à chacun de ses bords, un flanc 83 et un bourrelet 84, le bourrelet 84 étant renforcé avec une tringle 85. L'armature de sommet 86 est surmontée radialement extérieurement d'une bande de roulement en mélange élastomère 89. Une armature de carcasse constituée d'une seule couche de carcasse 87 est enroulée autour de la tringle 85 dans le bourrelet 84, le retournement 88 de cette couche de carcasse 87 étant disposé axialement vers l'extérieur de l'enveloppe pneumatique 100. La couche de carcasse 87 est de manière connue en soi constituée d'au moins une nappe renforcée par des câbles dits « radiaux », par exemple ici textiles, c'est-à-dire que ces câbles sont disposés pratiquement parallèles les uns aux autres et s'étendent d'un bourrelet à l'autre de manière à former un angle compris entre 80° et 90° avec le plan circonférentiel médian EP. Une couche de gomme intérieure étanche 90 (en anglais « inner liner ») s'étend d'un bourrelet à l'autre radialement intérieurement relativement à l'armature de carcasse 87. Le bourrelet 84 comporte une deuxième couche de mélange élastomère (ou « protecteur ») 93 apte à être en contact avec la surface d'une jante se terminant par l'extrémité 933 représentant l'extrémité radialement intérieure 841 du bourrelet 84. Il comporte aussi une quatrième couche de mélange élastomère 91 s'étendant radialement extérieurement relativement à la tringle 85.

Le pneumatique 100 est apte à rouler à plat en raison de la présence d'un insert de flanc 96 disposé axialement intérieurement relativement à la partie principale de l'armature de carcasse 87. Cet insert de flanc 96 permet à la structure du pneumatique de supporter la charge à pression nulle. L'ordre de grandeur du module d'extension d'une gomme caoutchouteuse d'un insert de flanc est de l'ordre de deux fois la valeur du module d'une gomme de flanc ou plus.

L'insert de flanc 96 de la Fig. 11 comporte un premier transpondeur radiofréquence passif 1 disposé à une distance radiale D1 de l'extrémité radialement intérieure 933 du bourrelet 84. La distance D1 doit être supérieure à D0 égale à 20 mm pour ne pas pénaliser la qualité de communication entre le transpondeur radiofréquence passif 1 et un lecteur externe. Cette distance est supérieure à la hauteur d'un crochet de jante usuel qui est de 17,5 millimètres. Préférentiellement, la distance D1 est inférieure à 50 millimètres

On place de préférence le premier transpondeur radiofréquence passif 1 dans le semi-fini de l'insert de flanc 96 avant son incorporation dans l'ébauche de l'enveloppe pneumatique 100.

L'insert de flanc 96, dans l'exemple de la Fig. 11, est constitué de deux masses de gommes 961 et 962 adjacentes axialement l'une par rapport à l'autre. Le premier transpondeur radiofréquence passif 1 est placé à l'interface entre les deux masses de gommes 961 et 962.

Ce mode de réalisation facilite la mise en place précise et reproductible du transpondeur radiofréquence passif 1 lors de la confection de l'enveloppe pneumatique 100.

Un second transpondeur radiofréquence passif 1bis est placé à l'intérieur de la masse de gomme 962 par l'intermédiaire d'une fente située sur l'une des surfaces de la masse de gomme 962 permettant l'insertion du transpondeur radiofréquence passif 1bis au sein de la masse de gomme 962. Ce second mode de réalisation facilite le positionnement du transpondeur radiofréquence passif par rapport à la partie principale de la couche d'armature de carcasse 87, en étant en contact avec la masse de gomme, et homogénéise l'environnement diélectrique à proximité du transpondeur radiofréquence passif 1bis, ce qui améliore sa performance radiofréquence notamment si l'épaisseur du dispositif d'isolation électrique du transpondeur radiofréquence passif 1bis n'est pas à la valeur seuil. De plus, elle est située plus radialement extérieurement par rapport à l'axe de révolution de référence de l'enveloppe pneumatique 100.

La Fig. 11 illustre la zone Z de la hauteur de section SH de l'enveloppe pneumatique 100 dans laquelle il est préférable de positionner les transpondeurs radiofréquences passifs 1 et 1bis. Cette zone Z s'étend de 20 à 70% de SH. Le transpondeur radiofréquence passif 1 est placé à environ 25% de SH et le transpondeur radiofréquence passif 1bis à 60% de cette grandeur.

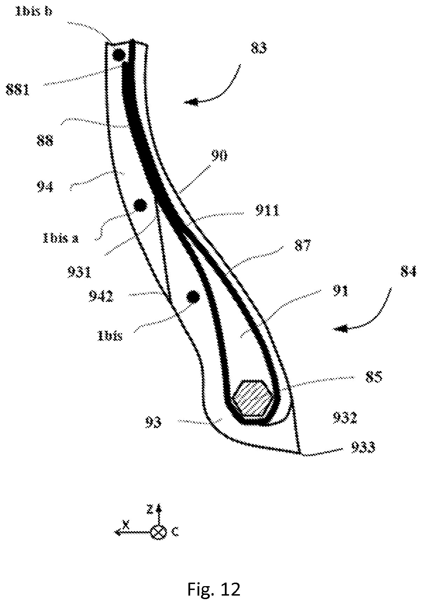

La Fig. 12 est une coupe axiale d'une enveloppe pneumatique 100 au niveau du bourrelet 84 et du flanc 83. L'enveloppe pneumatique comprend un bloc sommet se terminant par un bourrelet 84 à chacune de ses bords axiaux par l'intermédiaire d'un flanc 83.

La Fig. 12 présente un bourrelet 84 et un flanc 83 de pneumatique pour, principalement, des véhicules de tourisme. L'armature de carcasse, constituée d'une seule couche de carcasse sur la Fig. 12, est ancrée dans le bourrelet 84 par retournement autour de la tringle 85 afin de créer une partie principale 87 et un retournement 88 de l'armature de carcasse. Les fils de renfort de la couche de carcasse sont des fils textiles. La quatrième couche de mélange élastomère 91 sépare la partie principale de l'armature de carcasse 87 du retournement 88. Le retournement 88 de l'armature de carcasse s'étend radialement vers l'extérieur dans la zone du flanc 83 au-delà de l'extrémité radialement extérieure 911 de la quatrième couche de mélange élastomère 91.

La deuxième couche de mélange élastomère 93, couche en contact avec la jante lorsque l'enveloppe pneumatique est montée sur celle-ci, et la troisième couche de mélange élastomère 94 assurant la surface extérieure du pneumatique dans la zone de flanc 83 sont directement en contact avec le retournement 88. Il n'y a pas d'autre quatrième couche de mélange élastomère Ce bourrelet 84 comprend un premier transpondeur radiofréquence passif 1bis noyé dans la deuxième couche de mélange élastomère 93 à une position radialement extérieure relativement à la tringle 85 dans une fourchette comprise entre 20 et 40 millimètres pour être radialement extérieur au crochet de la jante J après montage du pneumatique pour assurer une bonne communication entre le transpondeur radiofréquence et un lecteur extérieur.

Cette Fig. 12 présente aussi deux positions alternatives 1bis a et 1bis b dans lesquelles le transpondeur radiofréquence passif est noyé dans la troisième couche de mélange élastomère 94. Comme précédemment ces deux dernières positions sont rendues possibles en raison de la bonne résistance mécanique du transpondeur radiofréquence passif de l'invention en raison de sa miniaturisation par rapport à des solutions de l'état de la technique. Toutes ces positions sont à l'intérieur de l'enveloppe pneumatique, axialement extérieurement à l'extrémité 933 de la deuxième couche de mélange élastomère qui constitue l'extrémité intérieure 841 du bourrelet 84.

Il est aussi possible de positionner ses transpondeurs radiofréquences à l'interface entre la deuxième couche de mélange élastomère 93 et le retournement 88 ou la troisième couche de mélange élastomère 94 et le retournement 88 ou la partie principale 87 de l'armature de carcasse. Il est alors indispensable d'éloigner les fils de couverture du transpondeur radiofréquence des éléments de renforcement pour préserver l'intégrité physique du transpondeur radiofréquence et/ou celle de l'enveloppe pneumatique. Et il est conseillé d'éloigner le transpondeur radiofréquence des extrémités 931 des couches de mélanges élastomères 93 et 94 et de l'extrémité 881 du retournement 88 d'au moins 5 voire 10 millimètres pour préserver l'intégrité physique de l'enveloppe pneumatique.

Bien entendu, l'orientation de l'antenne dipôle rayonnante du transpondeur radiofréquence passif par rapport à la direction définie par les éléments de renforcement de la partie principale de l'armature de carcasse est quelconque tant que la projection de l'antenne dipôle rayonnante intercepte au moins deux éléments de renforcement. Par conséquent, lorsque l'on parle de distance entre l'extrémité d'une couche et le transpondeur radiofréquence passif, on évoque la distance pour chaque point matériel du transpondeur radiofréquence passif dans chaque plan méridien de l'enveloppe pneumatique par rapport à l'extrémité de la couche dans le même plan méridien. On entend par transpondeur radiofréquence passif le fait que celui-ci est équipé d'une masse d'enrobage potentiellement. Cependant, il est plus pratique de positionner directement le transpondeur radiofréquence passif de sorte que le premier axe longitudinal soit sensiblement perpendiculaire à la direction des éléments de renforcement de la partie principale de la couche d'armature de carcasse.

Bien entendu, si les éléments de renforcement de la couche d'armature de carcasse 8 , et potentiellement les éléments de renforcement des couches de renfort, sont de nature métallique, il convient de garantir un angle d'au moins 30 degrés, et préférentiellement d'au moins 45 degrés entre le premier axe longitudinal du transpondeur radiofréquence passif et la direction de renforcement définie par ses éléments de renforcement. Ainsi, on minimise les perturbations de radiocommunication du transpondeur radiofréquence. Idéalement, dans une enveloppe pneumatique de type radiale à une seule couche d'armature de carcasse métallique, l'angle entre le premier axe longitudinal du transpondeur radiofréquence et la direction de renforcement de la couche d'armature est de 90 degrés.

## Revendications

1. Enveloppe pneumatique (100) de forme toroïdale autour d'un axe de référence équipée d'un transpondeur radiofréquence passif (1, 1bis, 1ter) et comportant :
- Un bloc sommet (82) comportant une armature de sommet (86) présentant une extrémité axiale (861) à chacun de ses bords et une bande de roulement (89), réuni à chacune de ses extrémités axiales (821) à un bourrelet (84) présentant une extrémité intérieure (841), située axialement et radialement intérieurement au bourrelet (84) par rapport à l'axe de référence, par l'intermédiaire d'un flanc (83),
- Une armature de carcasse, comprenant au moins une couche d'armature de carcasse formée d'éléments de renforcement parallèles entre eux, définissant une direction de renforcement, insérés entre deux couches de calandrage en mélange élastomère,
- Ladite au moins une couche d'armature de carcasse étant ancrée dans chacun des bourrelets (84) par retournement autour d'une tringle (85) annulaire pour former une partie principale de la au moins une couche d'armature de carcasse (87), s'étendant d'une tringle (85) à l'autre et située radialement intérieurement par rapport au bloc sommet (82), et un retournement de la au moins une couche d'armature de carcasse (88) dans chacun des bourrelets (84),
- Une deuxième couche de mélange élastomère (93) formant la surface extérieure de l'enveloppe pneumatique (100) dans la zone du bourrelet (84), ladite seconde couche de mélange élastomère (93) étant destinée à venir en contact avec la jante,
- Une troisième couche de mélange élastomère (94) située radialement extérieurement au contact de la deuxième couche de mélange élastomère (93) formant la surface extérieure dudit flanc (83),
- Le transpondeur radiofréquence passif (1, 1bis, 1ter), comprenant une âme principale (1012) définissant un premier axe longitudinal (1030), un premier fil de couverture primaire (1013a) enroulé en spires autour de l'âme principale (1012) définissant un diamètre d'enroulement D et un dispositif d'isolation électrique disposé radialement extérieurement au premier fil de couverture primaire (1013a) par rapport au premier axe longitudinal (1030) ;
- Le premier fil de couverture primaire (1013a) comprenant au moins deux éléments filaires conducteurs (1003a, 1003b), dont le diamètre est compris entre 0,05 et 0,15 millimètres, reliés galvaniquement à au moins une puce électronique (1002) comprenant un composant d'émission-réception radiofréquence (1004) ;
- L'âme principale (012) présentant une rigidité inférieure à la rigidité maximale du premier fil de couverture primaire (1013a, 1013b);
le dispositif d'isolation électrique présentant une permittivité diélectrique relative moyenne inférieure ou égale à 10, préférentiellement inférieure à 5, sur une épaisseur supérieure ou égale au sixième du diamètre d'enroulement D du premier fil de couverture primaire (1013a), le transpondeur radiofréquence passif (1, 1bis, 1ter), suivant sa direction longitudinale, étant situé au droit d'au moins deux éléments de renforcement de la partie principale de la au moins une couche d'armature de carcasse (87), le transpondeur radiofréquence passif se situant axialement extérieurement par rapport à l'extrémité intérieure (841) du bourrelet (84) et radialement entre l'extrémité la plus radialement extérieure (851) de la tringle (85) et l'extrémité axiale (861) de l'armature de sommet (86), préférentiellement à l'intérieur de l'enveloppe pneumatique (100) **et** l'épaisseur de mélange élastomère séparant le fil de couverture externe (10113a, 1013b, 1024, 1025) du transpondeur radiofréquence passif (1, 1bis, 1ter), situé le plus radialement extérieurement par rapport au premier axe longitudinal (1030), et les éléments de renforcement étant supérieure à 0,5 millimètre, préférentiellement supérieure à 1,0 millimètre.

2. Enveloppe pneumatique (100) selon la revendication 1 dans laquelle, le fil de couverture externe (1013a, 1013b, 1024, 1025) du transpondeur radiofréquence passif (1, 1bis, 1ter) est recouvert d'un promoteur d'adhésion (1020) entre le fil de couverture externe (1013a, 1013b, 1024, 1025) et les mélanges élastomères adjacents audit fil de couverture externe (1013a, 1013b, 1024, 1025).

3. Enveloppe pneumatique (100) selon l'une des revendications 1 à 2 dans laquelle l'enveloppe pneumatique (100) comprend au moins une quatrième couche de mélange élastomère (92) située axialement extérieurement à la partie principale de la au moins une couche d'armature de carcasse (87) et axialement intérieurement à la deuxième (93) et/ou troisième (94) couche de mélange élastomère.

4. Enveloppe pneumatique (100) selon l'une des revendications 1 à 3 dans laquelle, l'enveloppe pneumatique (100) comprenant au moins une couche étanche en mélange élastomère (90) située le plus intérieurement à l'enveloppe pneumatique (100), l'enveloppe pneumatique (100) comprend au moins une cinquième couche de mélange élastomère (96) axialement intérieurement à la partie principale de la au moins une couche d'armature de carcasse (87).

5. Enveloppe pneumatique (100) selon l'une des revendications 1 à 4 dans laquelle, l'enveloppe pneumatique (100) comprend au moins une couche d'armature (97) formée d'éléments de renforcement insérés entre deux couches de calandrage en mélange élastomère.

6. Enveloppe pneumatique (100) selon l'une des revendications 1 à 5 dans laquelle, les éléments de renforcement de la au moins une couche d'armature de carcasse (87) étant métalliques, le premier axe longitudinal (1030) du transpondeur radiofréquence passif (1, 1bis, 1ter) forme un angle d'au moins 45 degrés avec la direction de renforcement de la au moins une couche d'armature de carcasse (87).

7. Enveloppe pneumatique (100) selon l'une des revendications 1 à 6 dans laquelle, le premier fil de couverture primaire (1013a,) comprenant une âme tertiaire (1014) non extensible, disposée colinéairement aux au moins deux éléments filaires conducteurs (1003a, 1003b) et à la au moins une puce électronique (1002), et au moins un fil de couverture tertiaire (1015) enroulé en spires autour de l'âme tertiaire (1014), des au moins deux éléments filaires conducteurs (1003a, 1003b) et de la au moins une puce électronique (1002) , l'âme tertiaire (1014) présente une rigidité supérieure à la rigidité maximale de chaque élément filaire conducteur (1003a, 1003b).

8. Enveloppe pneumatique (100) selon l'une des revendications 1 à 7 dans laquelle, l'un des éléments filaires conducteurs (1003a, 1003b) étant connecté galvaniquement à l'extrémité d'un troisième élément filaire conducteur (1003c) dont l'autre extrémité est connectée galvaniquement à la au moins une puce électronique (1002) afin de former une boucle fermée, les parties des éléments filaires conducteurs (1003a, 1003b, 1003c) formant la boucle et la au moins une puce électronique (1002) sont isolées électriquement.

9. Enveloppe pneumatique (100) selon l'une des revendications 1 à 8 dans laquelle, le dispositif d'isolation électrique du transpondeur radiofréquence passif comprend au moins un fil de couverture secondaire (1024, 1025) enroulé en spires autour d'une âme secondaire (1021), de l'âme principale (1012) et du premier fil de couverture primaire (1013a), l'âme secondaire (1021) étant colinéaire à l'âme principale (1012).

10. Enveloppe pneumatique (100) selon l'une des revendications 1 à 9, dans laquelle la longueur L de la mise en hélice du premier fil de couverture primaire (1013a) du transpondeur radiofréquence passif (1, 1bis, 1ter) suivant le premier axe principal (1030) est comprise entre 30 et 80 millimètres.

11. Enveloppe pneumatique (100) selon l'une des revendications 1 à 10, dans laquelle le diamètre des éléments filaires conducteurs (1003a, 1003b, 1003c) est compris entre 0,08 et 0,11 millimètres.

12. Enveloppe pneumatique (100) selon l'une des revendications 1 à 11 dans laquelle, le transpondeur radiofréquence passif (1, 1ter) est situé à une interface définie par au moins une surface d'une couche de mélange élastomère (91, 92, 93, 94, 96) de ladite enveloppe pneumatique (100).

13. Enveloppe pneumatique (100) selon la revendication 12 dans laquelle, l'interface étant définie par une autre couche de mélange élastomère (91, 92, 93, 94, 96) ou une couche d'armature (97), le transpondeur radiofréquence passif (1, 1ter) est situé à une distance d'au moins 5 millimètres des extrémités des couches (91, 92, 93, 94, 96, 97) au niveau de l'interface.

14. Enveloppe pneumatique (100) selon l'une des revendications 1 à 11 dans laquelle, le transpondeur radiofréquence passif (1bis) est situé à l'intérieur d'une couche de mélange élastomère (91, 92, 93, 94, 96) de ladite enveloppe pneumatique (100).

15. Enveloppe pneumatique (100) selon la revendication 14 dans laquelle, le premier axe longitudinal (1030) de l'antenne rayonnante dudit transpondeur radiofréquence passif (1bis) est perpendiculaire à l'épaisseur de la couche de mélange élastomère (91, 92, 93, 94, 96).

## Patentansprüche

1. Luftreifen (100) von ringförmiger Form um eine Referenzachse herum, der mit einem passiven Hochfrequenztransponder (1, 1bis, 1ter) ausgestattet ist und umfasst:
- einen Gürtelverbund (82), der eine Gürtelverstärkung (86), die ein axiales Ende (861) an jedem ihrer Ränder aufweist, und einen Laufstreifen (89) umfasst und der an jedem seiner axialen Enden (821) über eine Seitenwand (83) mit einem Wulst (84) verbunden ist, der ein inneres Ende (841) aufweist, das bezogen auf die Referenzachse axial und radial innerhalb des Wulstes (84) gelegen ist,
- eine Karkassenverstärkung, die mindestens eine Karkassenverstärkungslage umfasst, die aus parallel zueinander verlaufenden, eine Verstärkungsrichtung definierenden Verstärkungselementen gebildet ist, die zwischen zwei Kalandrierlagen aus Elastomermischung angeordnet sind,
- wobei die mindestens eine Karkassenverstärkungslage in jedem der Wülste (84) durch Umschlagen um einen ringförmigen Wulstkern (85) verankert ist, um einen Hauptteil der mindestens einen Karkassenverstärkungslage (87), der sich von einem Wulstkern (85) zum anderen erstreckt und radial innerhalb bezogen auf den Gürtelverbund (82) gelegen ist, und einen Umschlag der mindestens einen Karkassenbewehrungslage (88) in jedem der Wülste (84) zu bilden,
- eine zweite Elastomermischungslage (93), die die Außenoberfläche des Luftreifens (100) im Bereich des Wulstes (84) bildet, wobei die zweite Elastomermischungslage (93) dazu bestimmt ist, mit der Felge in Kontakt zu gelangen,
- eine dritte Elastomermischungslage (94), die radial außerhalb in Kontakt mit der zweiten Elastomermischungslage (93) gelegen ist und die Außenoberfläche der Seitenwand (83) bildet,
- wobei der Hochfrequenztransponder (1, 1bis, 1ter) einen Hauptkern (1012) umfasst, der eine erste Längsachse (1030) definiert, einen ersten Primärumhüllungsfaden (1013a), der in Windungen um den Hauptkern (1012) herum gewickelt ist, die einen Wicklungsdurchmesser D definieren, und eine Vorrichtung zur elektrischen Isolierung, die radial außerhalb des ersten Primärumhüllungsfadens (1013a) bezogen auf die erste Längsachse (1030) angeordnet ist;
- wobei der erste Primärumhüllungsfaden (1013a) mindestens zwei leitende fadenförmige Elemente (1003a, 1003b) umfasst, deren Durchmesser zwischen 0,05 und 0,15 Millimeter beträgt, die galvanisch mit mindestens einem elektronischen Chip (1002) verbunden sind, der eine Hochfrequenz-Sende-/Empfangskomponente (1004) umfasst;
- wobei der Hauptkern (012) eine Steifigkeit aufweist, die geringer als die maximale Steifigkeit des ersten Primärumhüllungsfadens (1013a, 1013b) ist;
wobei die Vorrichtung zur elektrischen Isolierung eine mittlere relative dielektrische Permittivität kleiner als oder gleich 10, bevorzugt kleiner als 5, über eine Dicke größer als oder gleich einem Sechstel des Wicklungsdurchmessers D des ersten Primärumhüllungsfadens (1013a) aufweist, wobei der passive Hochfrequenztransponder (1, 1bis, 1ter) entlang seiner Längsrichtung direkt unter mindestens zwei Verstärkungselementen des Hauptteils der mindestens einen Karkassenverstärkungslage (87) gelegen ist, wobei der passive Hochfrequenztransponder axial außerhalb bezogen auf das innere Ende (841) des Wulstes (84) und radial zwischen dem radial äußersten Ende (851) des Wulstkerns (85) und dem axialen Ende (861) der Gürtelverstärkung (86) gelegen ist, bevorzugt im Inneren des Luftreifens (100), und wobei die Elastomermischungsdicke, die den äußeren Umhüllungsfaden (10113a, 1013b, 1024, 1025) des passiven Hochfrequenztransponders (1, 1bis, 1ter), der radial am weitesten außen bezogen auf die erste Längsachse (1030) gelegen ist, und die Verstärkungselemente trennt, mehr als 0,5 Millimeter, bevorzugt mehr als 1,0 Millimeter beträgt.

2. Luftreifen (100) nach Anspruch 1, wobei der äußere Umhüllungsfaden (1013a, 1013b, 1024, 1025) des passiven Hochfrequenztransponders (1, 1bis, 1ter) mit einem Haftvermittler (1020) zwischen dem äußeren Umhüllungsfaden (1013a, 1013b, 1024, 1025) und den an den äußeren Umhüllungsfaden (1013a, 1013b, 1024, 1025) angrenzenden Elastomermischungen überzogen ist.

3. Luftreifen (100) nach einem der Ansprüche 1 bis 2, wobei der Luftreifen (100) mindestens eine vierte Elastomermischungslage (92) umfasst, die axial außerhalb des Hauptteils der mindestens einen Karkassenverstärkungslage (87) und axial innerhalb der zweiten (93) und/oder dritten (94) Elastomermischungslage gelegen ist.

4. Luftreifen (100) nach einem der Ansprüche 1 bis 3, wobei, wenn der Luftreifen (100) mindestens eine dichte Lage aus Elastomermischung (90) umfasst, die axial am weitesten innen im Luftreifen (100) gelegen ist, der Luftreifen (100) mindestens eine fünfte Elastomermischungslage (96) axial innerhalb des Hauptteils der mindestens einen Karkassenverstärkungslage (87) umfasst.

5. Luftreifen (100) nach einem der Ansprüche 1 bis 4, wobei der Luftreifen (100) mindestens eine Verstärkungslage (97) umfasst, die aus Verstärkungselementen gebildet wird, die zwischen zwei Kalandrierlagen aus Elastomermischung angeordnet sind.

6. Luftreifen (100) nach einem der Ansprüche 1 bis 5, wobei, wenn die Verstärkungselemente der mindestens einen Karkassenverstärkungslage (87) metallisch sind, die erste Längsachse (1030) des passiven Hochfrequenztransponders (1, 1bis, 1ter) einen Winkel von mindestens 45 Grad mit der Verstärkungsrichtung der mindestens einen Karkassenverstärkungslage (87) bildet.

7. Luftreifen (100) nach einem der Ansprüche 1 bis 6, wobei, wenn der erste Primärumhüllungsfaden (1013a,) einen nicht dehnbaren Tertiärkern (1014) umfasst, der kollinear zu den mindestens zwei leitenden fadenförmigen Elementen (1003a, 1003b) und zu dem mindestens einen elektronischen Chip (1002) angeordnet ist, und mindestens einen Tertiärumhüllungsfaden (1015), der in Windungen um den Tertiärkern (1014), die mindestens zwei leitenden fadenförmigen Elemente (1003a, 1003b) und den mindestens einen elektronischen Chip (1002) herum gewickelt ist, der Tertiärkern (1014) eine Steifigkeit aufweist, die größer als die maximale Steifigkeit jedes leitenden fadenförmigen Elements (1003a, 1003b) ist.

8. Luftreifen (100) nach einem der Ansprüche 1 bis 7, wobei, wenn eines der leitenden fadenförmigen Elemente (1003a, 1003b) galvanisch mit dem Ende eines dritten leitenden fadenförmigen Elements (1003c) verbunden ist, dessen anderes Ende galvanisch mit dem mindestens einen elektronischen Chip (1002) verbunden ist, um eine geschlossene Schleife zu bilden, die Teile der leitenden fadenförmigen Elemente (1003a, 1003b, 1003c), die die Schleife bilden, und der mindestens eine elektronische Chip (1002) elektrisch isoliert sind.

9. Luftreifen (100) nach einem der Ansprüche 1 bis 8, wobei die Vorrichtung zur elektrischen Isolierung des passiven Hochfrequenztransponders mindestens einen Sekundärumhüllungsfaden (1024, 1025) umfasst, der in Windungen um einen Sekundärkern (1021), den Hauptkern (1012) und den ersten Primärumhüllungsfaden (1013a) herum gewickelt ist, wobei der Sekundärkern (1021) kollinear zu dem Hauptkern (1012) ist.

10. Luftreifen (100) nach einem der Ansprüche 1 bis 9, wobei die Twistlänge L des ersten Primärumhüllungsfadens (1013a) des passiven Hochfrequenztransponders (1, 1bis, 1ter) entlang der ersten Hauptachse (1030) zwischen 30 und 80 Millimeter beträgt.

11. Luftreifen (100) nach einem der Ansprüche 1 bis 10, wobei der Durchmesser der leitenden fadenförmigen Elemente (1003a, 1003b, 1003c) zwischen 0,08 und 0,11 Millimeter beträgt.

12. Luftreifen (100) nach einem der Ansprüche 1 bis 11, wobei der passive Hochfrequenztransponder (1, 1ter) an einer Grenzfläche gelegen ist, die durch mindestens eine Oberfläche einer Elastomermischungslage (91, 92, 93, 94, 96) des Luftreifens (100) definiert wird.

13. Luftreifen (100) nach Anspruch 12, wobei, wenn die Grenzfläche durch eine andere Elastomermischungslage (91, 92, 93, 94, 96) oder eine Verstärkungslage (97) definiert wird, der passive Hochfrequenztransponder (1, 1ter) an der Grenzfläche in einem Abstand von mindestens 5 Millimetern von den Enden der Lagen (91, 92, 93, 94, 96, 97) gelegen ist.

14. Luftreifen (100) nach einem der Ansprüche 1 bis 11, wobei der passive Hochfrequenztransponder (1bis) im Inneren einer Elastomermischungslage (91, 92, 93, 94, 96) des Luftreifens (100) gelegen ist.

15. Luftreifen (100) nach Anspruch 14, wobei die erste Längsachse (1030) der strahlenden Antenne des passiven Hochfrequenztransponders (1bis) senkrecht zu der Dicke der Elastomermischungslage (91, 92, 93, 94, 96) verläuft.

## Claims

1. Tyre casing (100) in the shape of a torus around a reference axis equipped with a passive radiofrequency transponder (1, 1bis, 1ter) and comprising:
- a crown block (82) comprising a crown reinforcement (86) having an axial end (861) at each of its edges and a tread (89), joined at each of its axial ends (821) to a bead (84) having an inner end (841), located axially and radially on the inside of the bead (84) with respect to the reference axis, via a sidewall (83),
- a carcass reinforcement, comprising at least one carcass reinforcement layer formed of mutually parallel reinforcing elements, defining a reinforcement direction, and which are inserted between two skim layers of elastomeric compound,
- said at least one carcass reinforcement layer being anchored in each of the beads (84) by being turned up around an annular bead wire (85) to form a main part of the at least one carcass reinforcing layer (87), extending from one bead wire (85) to the other and situated radially on the inside with respect to the crown block (82), and a turn-up of the at least one carcass reinforcement layer (88) in each of the beads (84),
- a second layer of elastomer compound (93) forming the exterior surface of the tyre casing (100) in the region of the bead (84), said second layer of elastomer compound (93) being intended to come into contact with the rim,
- a third layer of elastomer compound (94) situated radially on the outside in contact with the second layer of elastomer compound (93) forming the exterior surface of said sidewall (83),
- the passive radiofrequency transponder (1, 1bis, 1ter), comprising a main core (1012) defining a first longitudinal axis (1030), a first primary cover filament (1013a) wound in turns around the main core (1012) defining a winding diameter D and an electrical insulation device disposed radially on the outside of the first primary cover filament (1013a) with respect to the first longitudinal axis (1030);
- the first primary cover filament (1013a) comprising at least two conductive filamentary elements (1003a, 1003b), the diameter of which is between 0.05 and 0.15 millimetres, galvanically connected to at least one electronic chip (1002) comprising a radiofrequency transmission-reception component (1004);
- the main core (012) having a stiffness lower than the maximum stiffness of the first primary cover filament (1013a, 1013b);
the electrical insulation device having a mean relative dielectric permittivity less than or equal to 10, preferably less than 5, over a thickness greater than or equal to one sixth of the winding diameter D of the first primary cover filament (1013a), the passive radiofrequency transponder (1, 1bis, 1ter), in its longitudinal direction, being located in line with at least two reinforcing elements of the main part of the at least one carcass reinforcement layer (87), the passive radiofrequency transponder being located axially on the outside of the inner end (841) of the bead (84) and radially between the radially outermost end (851) of the bead wire (85) and the axial end (861) of the crown reinforcement (86), preferably on the inside of the tyre casing (100) and the thickness of elastomer compound separating the outer cover filament (10113a, 1013b, 1024, 1025) of the passive radiofrequency transponder (1, 1bis, 1ter), located radially outermost with respect to the first longitudinal axis (1030), and the reinforcement elements being greater than 0.5 millimetres, preferably greater than 1.0 millimetre.

2. Tyre casing (100) according to Claim 1, wherein the outer cover filament (1013a, 1013b, 1024, 1025) of the passive radiofrequency transponder (1, 1bis, 1ter) is covered with an adhesion promoter (1020) promoting adhesion between the outer cover filament (1013a, 1013b, 1024, 1025) and the elastomer compounds adjacent to said outer cover filament (1013a, 1013b, 1024, 1025).

3. Tyre casing (100) according to one of Claims 1 to 2, wherein the tyre casing (100) comprises at least one fourth layer of elastomeric compound (92) located axially on the outside of the main part of the at least one carcass reinforcement layer (87) and axially on the inside of the second (93) and/or third (94) layer of elastomeric compound.

4. Tyre casing (100) according to one of Claims 1 to 3, wherein, with the tyre casing (100) comprising at least one airtight layer of elastomer compound (90) situated furthest towards the inside of the tyre casing (100), the tyre casing (100) comprises at least a fifth layer of elastomer compound (96) axially on the inside of the main part of the at least one carcass reinforcement layer (87).

5. Tyre casing (100) according to one of Claims 1 to 4, wherein the tyre casing (100) comprises at least one reinforcement layer (97) which is formed of reinforcing elements inserted between two skim layers of rubber compound.

6. Tyre casing (100) according to one of Claims 1 to 5 wherein, with the reinforcing elements of the at least one carcass reinforcement layer (87) being metallic, the first longitudinal axis (1030) of the passive radiofrequency transponder (1, Ibis, 1ter) forms an angle of at least 45 degrees with the direction of reinforcement of the at least one carcass reinforcement layer (87).

7. Tyre casing (100) according to one of Claims 1 to 6, wherein, with the first primary cover filament (1013a,) comprising a non-stretch tertiary core (1014), arranged collinearly with the at least two conductive filamentary elements (1003a, 1003b) and with the at least one electronic chip (1002), and at least one tertiary cover filament (1015) wound in turns around the tertiary core (1014), the at least two conductive filamentary elements (1003a, 1003b) and the at least one electronic chip (1002), the tertiary core (1014) has a stiffness greater than the maximum stiffness of each conductive filamentary element (1003a, 1003b).

8. Tyre casing (100) according to one of Claims 1 to 7, wherein, with one of the conductive filamentary elements (1003a, 1003b) being galvanically connected to the end of a third conductive filamentary element (1003c), the other end of which is galvanically connected to the at least one electronic chip (1002) in order to form a closed loop, the parts of the conductive filamentary elements (1003a, 1003b, 1003c) forming the loop and the at least one electronic chip (1002) are electrically insulated.

9. Tyre casing (100) according to one of Claims 1 to 8, wherein the electrical insulation device of the passive radiofrequency transponder comprises at least one secondary cover filament (1024, 1025) wound in turns around a secondary core (1021), the main core (1012) and the first primary cover filament (1013a), the secondary core (1021) being collinear with the main core (1012).

10. Tyre casing (100) according to one of Claims 1 to 9, in which the length L of the helical twisting of the first primary cover filament (1013a) of the passive radiofrequency transponder (1, Ibis, 1ter) along the first main axis (1030) is between 30 and 80 millimetres.

11. Tyre casing (100) according to one of Claims 1 to 10, wherein the diameter of the conductive filamentary elements (1003a, 1003b, 1003c) is between 0.08 and 0.11 millimetres.

12. Tyre casing (100) according to one of Claims 1 to 11, wherein the passive radiofrequency transponder (1, 1ter) is situated at an interface defined by at least a surface of a layer of elastomer compound (91, 92, 93, 94, 96) of said tyre casing (100).

13. Tyre casing (100) according to Claim 12, wherein, with the interface being defined by another layer of elastomer compound (91, 92, 93, 94, 96) or a reinforcement layer (97), the passive radiofrequency transponder (1, 1ter) is situated at a distance of at least 5 millimetres from the ends of the layers (91, 92, 93, 94, 96, 97) at the interface.

14. Tyre casing (100) according to one of Claims 1 to 11, wherein the passive radiofrequency transponder (Ibis) is situated on the inside of a layer of elastomer compound (91, 92, 93, 94, 96) of said tyre casing (100).

15. Tyre casing (100) according to Claim 14, wherein the first longitudinal axis (1030) of the radiating antenna of said passive radiofrequency transponder (Ibis) is perpendicular to the thickness of the layer of elastomer compound (91, 92, 93, 94, 96).
